(19) Europäisches Patentamt / European Patent Office / Office européen des brevets

(11) **EP 4 345 699 A1**

(12) **EUROPEAN PATENT APPLICATION**
published in accordance with Art. 153(4) EPC

(43) Date of publication:
**03.04.2024 Bulletin 2024/14**

(21) Application number: **22827520.2**

(22) Date of filing: **20.06.2022**

(51) International Patent Classification (IPC):
*G06N 20/00* (2019.01)

(52) Cooperative Patent Classification (CPC):
**G06N 20/00**

(86) International application number:
**PCT/CN2022/099839**

(87) International publication number:
**WO 2022/268027 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.06.2021 CN 202110688066
22.07.2021 CN 202110831248**

(71) Applicant: **Huawei Technologies Co., Ltd.
Longgang
Shenzhen, Guangdong 518129 (CN)**

(72) Inventors:
- **REN, Jinke
  Hangzhou, Zhejiang 310058 (CN)**
- **YU, Guanding
  Hangzhou, Zhejiang 310058 (CN)**
- **LIU, Chonghe
  Hangzhou, Zhejiang 310058 (CN)**
- **WANG, Jian
  Shenzhen, Guangdong 518129 (CN)**
- **LI, Rong
  Shenzhen, Guangdong 518129 (CN)**

(74) Representative: **Maiwald GmbH
Engineering
Elisenhof
Elisenstrasse 3
80335 München (DE)**

(54) **TRAINING METHOD FOR GAN, MACHINE LEARNING SYSTEM AND COMMUNICATION APPARATUS**

(57) A GAN training method, a machine learning system, and a communication apparatus are provided, which relate to the field of communication technologies and AI. The machine learning system includes a first device and a second device, where a first GAN runs on the first device, a second GAN runs on the second device, the first GAN includes a first generator and a first discriminator, and the second GAN includes a second generator and a second discriminator. The first device transmits a parameter of the first discriminator of the first device to the second device, receives a parameter of the second discriminator and a parameter of the second generator from the second device, where the parameter of the second discriminator is determined by the second device by performing parameter aggregation on parameters of first discriminators from at least one first device, and the parameter of the second generator is determined by the second device based on the parameter of the second discriminator, and updates the parameter of the first discriminator and the parameter of the first generator. This reduces an amount of data transmitted between the first device and the second device, and improves training efficiency of the GAN.

| Terminal 1 | ... | Terminal *k* | | Central server |
|---|---|---|---|---|

Step 601A. Transmit a parameter of a first discriminator of the terminal 1

Step 601B. Transmit a parameter of a first discriminator of the terminal *k*

Step 602. Perform parameter aggregation on the parameter of the first discriminator of the terminal 1 and the parameter of the first discriminator of the terminal k to determine a parameter of a second discriminator, and determine a parameter of a second generator based on the parameter of the second discriminator

Step 603A. Transmit the parameter of the second discriminator and the parameter of the second generator

Step 603B. Transmit the parameter of the second discriminator and the parameter of the second generator

Step 604A. Update the parameter of the first discriminator of the terminal 1 and the parameter of the first generator of the terminal 1 based on the parameter of the second discriminator and the parameter of the second generator

Step 604B. Update the parameter of the first discriminator of the terminal k and the parameter of the first generator of the terminal k based on the parameter of the second discriminator and the parameter of the second generator

FIG. 6

**Description**

**CROSS-REFERENCE TO RELATED APPLICATIONS**

This application claims priorities to Chinese Patent Application No. 202110688066.4, filed with the China National Intellectual property administration on June 21, 2021 and entitled "GAN TRAINING METHOD, MACHINE LEARNING SYSTEM, AND COMMUNICATION APPARATUS", and to Chinese Patent Application No. 202110831248.2, filed with the China National Intellectual property administration on July 22, 2021 and entitled "TRAINING METHOD, MACHINE LEARNING SYSTEM, AND COMMUNICATION APPARATUS", both of which are incorporated herein by reference in their entireties.

**TECHNICAL FIELD**

Embodiments of this application relate to the field of communication technologies and artificial intelligence (artificial intelligence, AI), and in particular, to a generative adversarial network (generative adversarial network, GAN) training method, a machine learning system, and a communication apparatus.

**BACKGROUND**

A generative model (generative model, GM) is a research direction of rapid development in the field of computer vision in recent years. In 2014, Ian Goodfellow proposed a generative model based on probability distribution to generate simulation data, and named the model as GAN. Because of its ability to approximate complex probability density functions, a generative adversarial network has been proved to be available for various machine learning tasks, including image generation, video generation, and natural language processing.

With the advent of a big data era, a device generates a large amount of raw data in various forms every day. However, during data transmission through GAN-based centralized learning, a large amount of data is reported. Due to limited bandwidth and transmission unreliability of a wireless channel, a channel bit error occurs when a terminal uploads a gradient update, which affects convergence of global model training, and training efficiency of the GAN is

**SUMMARY**

This application provides a GAN training method, a machine learning system, and a communication apparatus, to reduce reporting of information between devices, and improve GAN training efficiency.

According to a first aspect, this application provides a GAN training method. The method may be applied to a machine learning system. The machine learning system includes a first device and a second device, where a first GAN runs on the first device, a second GAN runs on the second device, the first GAN includes a first generator and a first discriminator, and the second GAN includes a second generator and a second discriminator. The first device may be a terminal device, for example, user equipment (user equipment, UE) or a vehicle-mounted device, or may be understood as a module (for example, a chip) in the terminal device. The second device may be a network device, for example, a transmission and reception point (transmission reception point, TRP) or a fifth generation mobile communication technology (5th generation mobile communication technology, 5G) base station (gnodeB, gNB), or may be understood as a module (for example, a chip) in the network device. This is not specifically limited in this application.

The method includes: The first device transmits a parameter of the first discriminator of the first device to the second device, where the parameter of the first discriminator is determined by the first device based on local data and a parameter of the first generator of the first device; receives a parameter of the second discriminator and a parameter of the second generator from the second device, where the parameter of the second discriminator is determined by the second device by performing parameter aggregation on parameters of first discriminators from at least one first device, and the parameter of the second generator is determined by the second device based on the parameter of the second discriminator; and updates the parameter of the first discriminator and the parameter of the first generator based on the parameter of the second discriminator and the parameter of the second generator.

In this application, GAN training is implemented through interaction between the first device and the second device. The first device transmits the parameter of the first discriminator to the second device, so that the second device performs parameter aggregation to determine the parameter of the second discriminator, instead of transmitting local original data to the second device. This manner can ensure privacy of user data of the first device, and a data amount of the parameter of the first discriminator is significantly reduced compared with transmitting the local original data. In addition, during the GAN training, an update of the parameter of the first discriminator and the parameter of the first generator is determined by using the parameter of the second discriminator and the parameter of the second generator of the second device. In this manner, data processing pressure of the first device can be reduced, and training efficiency of the GAN can be improved.

In an optional manner, the parameter of the first discriminator can be determined by the first device based on the local data, the parameter of the first generator, and a first random number sample set; and the parameter of the second generator can be determined by the second device based on the parameter of the second discriminator and a second random number sample set, where the second random number sample set is the same as a union set of first random number sample sets of X first devices, and the X first devices each transmit the parameter of the first discriminator to the second device, where X is a positive integer greater than or equal to 1.

It should be noted that, in an actual application, the first random number sample can be input into the first generator that uses the parameter of the first generator as a parameter to obtain "false" data, and then the "false" data and real data, that is, local data, are input into the first discriminator, and the first discriminator is trained, to obtain the parameter of the first discriminator. The second random number sample and the parameter of the second discriminator are input into the second generator, and the second generator is trained, to obtain the parameter of the second generator. In addition, because the second device may be communicatively connected to a plurality of first devices, the second random number sample set includes first random number samples of all first devices that transmit a parameter of the first discriminator to the second device. The first random number sample may be actively sent by the first device, or may be generated by the second device in a same random number generation manner as the first device. This is not specifically limited herein in this application. The second random number sample set is the same as a union set of first random number sample sets of the X first devices, so that the GAN training can be performed.

In an optional manner, the parameter of the first discriminator may be updated for M times, where M is a positive integer greater than or equal to 1. An (i+1)th update of the parameter of the first discriminator may be determined by the first device based on the local data, an ith updated parameter of the first generator, and the first random number sample set, and i is any integer from 1 to (M-1).

It should be noted that, in the "alternating update" training mechanism provided in this embodiment, a manner in which the first discriminator of the first device and the second generator of the second device "counteract" each other for training can effectively improve a performance gain of a model in each training period, thereby reducing a total quantity of training periods required for model convergence, and reducing communication overheads between the first device and the second device. In a system with limited communication and sufficient computing (such as a narrow-band cellular system), the "alternating update" training mechanism can effectively accelerate the training process.

In another optional manner, the parameter of the first discriminator may be updated for M times, where M is a positive integer greater than or equal to 1. An ith update of the parameter of the first discriminator may be determined by the first device based on the local data, an ith updated parameter of the first generator, and the first random number sample set, and i is any integer from 1 to M.

It should be noted that, in the "simultaneous update" training mechanism provided in this embodiment, the first device and the second device simultaneously perform training based on a same group of model parameters before update, so that parallel model update of the first discriminator of the first device and the second generator of the second device can be effectively implemented, and a delay of each round of training can be effectively reduced. In a system with limited computing and sufficient communication (such as a broad-band sensor network), the "synchronous update" training mechanism can effectively accelerate the training process.

In an optional manner, the first random number sample set and the second random number sample set are determined according to a same pseudo-random number algorithm.

Correspondingly, the first random number sample set may be determined in the following manner:

The first device may select a random number seed, determine a quantity of elements in the first preset random number sample set, and input the random number seed and the quantity of elements in the first preset random number sample set into a pseudo random number generator to determine the first random number sample set.

In another optional manner, the first random number sample set and the second random number sample set are determined based on a same random number codebook.

Correspondingly, the first device may select an initial codebook location, determine a quantity of elements in the second preset random number sample set, and query the random number codebook based on the initial codebook location and the quantity of elements in the second preset random number sample set, to determine the first random number sample set.

In an optional manner, before the transmitting the parameter of the first discriminator to the second device, the first device may receive random number sample set synchronization information from the second device.

In an optional manner, before the transmitting the parameter of the first discriminator to the second device, the first device may further transmit random number sample set synchronization information to the second device.

According to a second aspect, this application provides a GAN training method, applied to a machine learning system. The machine learning system includes a first device and a second device, where a first GAN runs on the first device, a second GAN runs on the second device, the first GAN includes a first generator and a first discriminator, and the second GAN includes a second generator and a second discriminator. The first device may be a terminal device, for example, UE or a vehicle-mounted device, or may be understood as a module (for example, a chip) in the terminal device. The second device may be a network device, for example, a TRP or a gNB, or may be understood as a module (for example, a chip) in the network device. This is not specifically limited in this application.

The method includes: The second device receives parameters of first discriminators from N first devices, where the parameter of the first discriminator is determined by the first device based on local data and a parameter of the first generator of the first device, and N is an integer greater than or equal to 1; performs parameter aggregation on the parameters of the first discriminators of the N first devices to determine the parameter of the second discriminator, and determine the parameter of the second generator based on the parameter of the second discriminator; and transmits the parameter of the second discriminator and the parameter of the second generator to L first devices, where L is a positive integer.

In this application, GAN training is implemented through interaction between the first device and the second device. The first device transmits the parameter of the first discriminator to the second device, so that the second device performs parameter aggregation to determine the parameter of the second discriminator, instead of transmitting local original data to the second device. This manner ensures privacy of user data of the first device, and a data amount of the parameter of the first discriminator is significantly reduced compared with transmitting the local original data. In addition, during the GAN training, an update of the parameter of the first discriminator and the parameter of the first generator is determined by using the parameter of the second discriminator and the parameter of the second generator of the second device. In this manner, data processing pressure of the first device can be reduced, and training efficiency of the GAN can be improved.

In addition, it should be further noted that, in an actual application, a location of the first device changes flexibly. After reporting the parameter of the first discriminator to the second device, the first device may move out of a coverage area of the second device. Therefore, the second device may not deliver the parameter of the second discriminator and the parameter of the second generator to such first device. In addition, the coverage area of the second device may include a plurality of first devices. After some first devices upload the parameter of the first discriminator of the first device, the second device may deliver a parameter of the second discriminator and a parameter of the second generator to all the first devices. In this way, training efficiency of a first GAN of the first device can be improved, and convergence of the GAN can be accelerated. Therefore, a value of L may be greater than N, equal to N, or may be less than N, and may be set based on an actual service requirement. This is not specifically limited in this application.

In addition, the foregoing determining a parameter of the second generator based on an aggregated parameter of the second discriminator is more convenient and quicker, and data calculation efficiency is increased.

In an optional manner, the parameter of the second generator may be further determined based on parameters of first discriminators of N first devices. In this manner, information about each parameter of the first discriminator may be considered. Based on the determined parameter of the second generator, the considered information is more comprehensive, and the determined parameter of the second generator is more reliable.

In an optional manner, the parameter of the first discriminator is determined by the first device based on the local data, the parameter of the first generator, and a first random number sample set; and the parameter of the second generator is determined by the second device based on the parameter of the second discriminator and a second random number sample set, where the second random number sample set is the same as a union set of first random number sample sets of X first devices, and the X first devices each transmit the parameter of the first discriminator to the second device, where X is a positive integer greater than or equal to 1.

In an optional manner, the first random number sample set and the second random number sample set may be determined according to a same pseudo-random number algorithm.

Correspondingly, a determining process of the first random number sample set may be as follows: The second device may receive the random number sample set synchronization information from the first device, select a random number seed, determine a quantity of elements in the first preset random number sample set, and input the random number seed and the quantity of elements in the first preset random number sample set into a pseudo random number generator to determine the second random number sample set.

In an optional manner, the first random number sample set and the second random number sample set may be determined based on a same random number codebook.

Correspondingly, a determining process of the second random number sample set may be as follows: The second device may receive the random number sample set synchronization information from the first device, and select a random number seed; the second device may select an initial codebook location, determine a quantity of elements in the second preset random number sample set and query the random codebook based on the initial codebook location and the quantity of elements in the second preset random number sample set, to determine the second random number sample set.

In an optional manner, the second device may transmit random number sample synchronization information, so that the first device determines the first random number sample set based on the random number sample synchronization information.

According to a third aspect, this application provides a machine learning system. The machine learning system includes a first device and a second device, where a first GAN runs on the first device, a second GAN runs on the second device, the first GAN includes a first generator and a first discriminator, and the second GAN includes a second generator and a second discriminator.

The first device may be configured to: transmit a parameter of the first discriminator of the first device to the second device, where the parameter of the first discriminator is determined by the first device based on local data and a parameter of the first generator of the first device; receive a parameter of the second discriminator and a parameter of the second generator from the second device, where the parameter of the second discriminator is determined by the second device by performing parameter aggregation on parameters of first discriminators from at least one first device, and the parameter of the second generator is determined by the second device based on the parameter of the second discriminator; and update the parameter of the first discriminator and the parameter of the first generator based on the parameter of the second discriminator and the parameter of the second generator.

The second device may be configured to: receive parameters of first discriminators from N first devices, where the parameter of the first discriminator is determined by the first device based on local data and a parameter of the first generator of the first device, and N is an integer greater than or equal to 1; perform parameter aggregation on the parameters of the first discriminators of the N first devices to determine the parameter of the second discriminator, and determine the parameter of the second generator based on the parameter of the second discriminator; and transmit the parameter of the second discriminator and the parameter of the second generator to L first devices, where L is a positive integer.

In an optional manner, the parameter of the first discriminator may be determined by the first device based on the local data, the parameter of the first generator, and a first random number sample set; and the parameter of the second generator is determined by the second device based on the parameter of the second discriminator and a second random number sample set, where the second random number sample set is the same as a union set of first random number sample sets of X first devices, and the X first devices each transmit the parameter of the first discriminator to the second device, where X is a positive integer greater than or equal to 1.

In an optional manner, the parameter of the first discriminator may be updated for M times, where M is a positive integer greater than or equal to 1. An (i+1)th update of the parameter of the first discriminator may be determined by the first device based on the local data, an ith updated parameter of the first generator, and the first random number sample set, and i is any integer from 1 to (M-1).

In an optional manner, the parameter of the first discriminator may be updated for M times, where M is a positive integer greater than or equal to 1. An ith update of the parameter of the first discriminator may be determined by the first device based on the local data, an ith updated parameter of the first generator, and the first random number sample set, and i is any integer from 1 to M.

In an optional manner, the first random number sample set and the second random number sample set may be determined according to a same pseudo-random number algorithm.

Correspondingly, the first device may further select a random number seed, determine a quantity of elements in the first preset random number sample set, and input the random number seed and the quantity of elements in the first preset random number sample set into a pseudo random number generator to determine the first random number sample set.

In an optional manner, the first random number sample set and the second random number sample set may be determined based on a same random number codebook.

Correspondingly, the first device may further select an initial codebook location, determine a quantity of elements in the second preset random number sample set, and query the random number codebook based on the initial codebook location and the quantity of elements in the second preset random number sample set, to determine the first random number sample set.

In an optional manner, before the transmitting the parameter of the first discriminator to the second device, the first device is further configured to receive random number sample set synchronization information from the second device.

In an optional manner, before the transmitting the parameter of the first discriminator to the second device, the first device is further configured to transmit random number sample set synchronization information to the second device.

According to a fourth aspect, this application provides a communication apparatus, including at least one processor and a memory. The memory is configured to store a computer program or instructions. When the apparatus runs, the at least one processor executes the computer program or the instructions, so that the communication apparatus performs the method according to the first aspect or the embodiments of the first aspect or the method according to the second aspect or the embodiments of the second aspect.

According to a fifth aspect, this application provides another communication apparatus, including an interface circuit and a logic circuit. The interface circuit may be understood as an input/output interface, and the logic circuit may be configured to run a code instruction to perform the method according to the first aspect or the embodiments of the first aspect or the method according to the second aspect or the embodiments of the second aspect.

According to a sixth aspect, this application further provides a computer-readable storage medium, where the computer-readable storage medium stores computer-readable instructions, and when the computer-readable instructions are run on a computer, the computer is enabled to perform the method according to the first aspect or any possible design of the first aspect or the method according to the second aspect or any possible design of the second aspect.

According to a seventh aspect, this application provides a computer program product including instructions. When the computer program product runs on a computer, the computer is enabled to perform the method according to the first aspect or the embodiments of the first aspect or the method according to the second aspect or the embodiments of the second aspect.

According to an eighth aspect, this application provides a chip system. The chip system includes a processor, and may further include a memory, configured to implement the method according to the first aspect or any possible design of the first aspect or the method according to the second aspect or any possible design of the second aspect. The chip system may include a chip, or may include a chip and another discrete component.

According to a ninth aspect, this application provides a communication system, where the system includes a first device and a second device, and the communication system is configured to perform the method according to the first aspect or any possible design of the first aspect or the method according to the second aspect or any possible design of the second aspect.

For technical effects that can be achieved by the second aspect to the ninth aspect, refer to descriptions of technical effects that can be achieved by corresponding possible design solutions in the first aspect. Details are not described herein again in this application.

**BRIEF DESCRIPTION OF DRAWINGS**

FIG. 1 is a schematic diagram of a communication system according to an embodiment of this application;

FIG. 2 is a schematic diagram of a structure of a federated learning system;

FIG. 3 is a schematic diagram of a structure of a GAN model;

FIG. 4A is a schematic diagram of a structure of a centralized GAN training system;

FIG. 4B is a schematic diagram of a structure of a federated learning GAN training system;

FIG. 5 is a schematic diagram of a structure of a machine learning system according to an embodiment of this application;

FIG. 6 is a schematic flowchart of a GAN training method according to an embodiment of this application;

FIG. 7 is a schematic diagram of a random sample generation method according to an embodiment of this application;

FIG. 8 is a schematic diagram of another random sample generation method according to an embodiment of this application;

FIG. 9A(1) and FIG. 9A(2) are a schematic flowchart of a synchronous update method according to an embodiment of this application;

FIG. 9B(1) and FIG. 9B(2) are a schematic flowchart of a synchronous update method according to an embodiment of this application;

FIG. 10A(1) and FIG. 10A(2) are a schematic flowchart of an alternating update method according to an embodiment of this application;

FIG. 10B(1) and FIG. 10B(2) are a schematic flowchart of an alternating update method according to an embodiment of this application;

FIG. 11 is a schematic diagram of a simulation result according to an embodiment of this application;

FIG. 12 is a schematic diagram of a simulation result according to an embodiment of this application;

FIG. 13 is a schematic diagram of a structure of a communication apparatus according to an embodiment of this application; and

FIG. 14 is a schematic diagram of a structure of a communication apparatus according to an embodiment of this application.

**DESCRIPTION OF EMBODIMENTS**

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, a plurality of means two or more than two. Therefore, for implementations of the apparatus and the method, reference may be made to each other, and no repeated description is provided.

The GAN training method provided in embodiments of this application may be applied to a 5G communication system or various future communication systems. Specifically, for example, the most typical three communication scenarios of the 5G communication system include enhanced mobile broadband (enhanced mobile broadband, eMBB), massive machine type communication (massive machine type communication, mMTC), and ultra-reliable low-latency communication (ultra-reliable low-latency communication, URLLC).

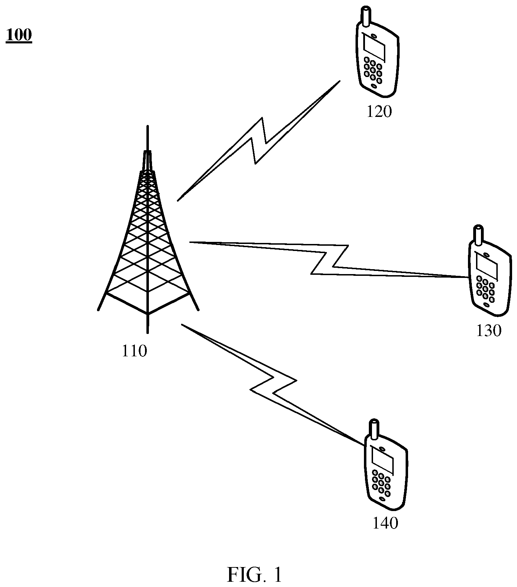

The following describes a communication system applicable to this application. A first device in the communication system may be a terminal device, a vehicle-mounted device, an Internet of Things device, or the like, and a second device may be a network device, a relay node, a TRP, or the like. This is not specifically limited in actual application in this application. An example in which the first device is a terminal device and the second device is a network device is used below. Refer to FIG. 1. A communication system to which this application may be applicable is described.

FIG. 1 shows a communication system 100 applicable to this application. The communication system 100 includes a network device 110, a terminal device 120, a terminal device 130, and a terminal device 140. Data may be exchanged between the network device 110 and the terminal device 120, the terminal device 130, or the terminal device 140. A quantity of terminal devices is not limited herein in this application. Herein, only the terminal device 120, the terminal device 130, and the terminal device 140 are used as examples for illustration.

The network device is an apparatus that is deployed in a radio access network and that provides a wireless communication function for a terminal device. An access network device has a wireless transceiving function or a chip that can be disposed in the device. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission and reception point, TRP, or transmission point, TP), or the like, or may be a gNB in a 5G (for example, NR) system, or a transmission point (TRP or TP), or one or a group of (including a plurality of antenna panels) antenna panels of a base station in the 5G system, or may be a network node that forms a gNB or a transmission point, such as a baseband unit (BBU), a DU, a satellite, or an unmanned aerial vehicle.

In some deployments, a gNB may include a central unit (central unit, CU) and a DU. The gNB may further include a radio frequency unit (radio unit, RU). The CU implements some functions of the gNB, and the DU implements some functions of the gNB. For example, the CU implements functions of RRC and packet data convergence protocol (packet data convergence protocol, PDCP) layers, and the DU implements functions of radio link control (radio link control, RLC), media access control (media access control, MAC), and physical (physical, PHY) layers. Information at the RRC layer eventually becomes information at the PHY layer (in other words, information sent through the PHY layer), or is converted from information at the PHY layer. Therefore, in this architecture, higher layer signaling, for example, RRC layer signaling or PDCP layer signaling, may also be considered as being sent by the DU or sent by the DU and the RU. It may be understood that the access network device may be a CU node, a DU node, or a device including a CU node and a DU node. In addition, the CU may be classified as a network device in an access network RAN, or the CU may be classified as a network device in a core network CN. This is not limited herein.

A terminal device in embodiments of this application, which may also be referred to as a terminal, is an entity configured to receive or transmit a signal on a user side, and is configured to send an uplink signal to a network device or receive a downlink signal from a network device. The terminal device includes a device that provides a user with voice and/or data connectivity, for example, may include a handheld device having a wireless connection function or a processing device connected to a wireless modem. The terminal device may communicate with a core network through a radio access network (radio access network, RAN), and exchange a voice and/or data with the RAN. The terminal device may include UE, a V2X terminal device, a wireless terminal device, a mobile terminal device, a device-to-device (device-to-device, D2D) terminal device, a machine-to-machine/machine type communication (machine-to-machine/machine-type communication, M2M/MTC) terminal device, an Internet of Things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), or user equipment (user device), a wearable device, a vehicle-mounted device, an unmanned aerial vehicle, or the like.

As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, a wearable intelligent device includes a full-featured and large-sized device that can implement all or a part of functions without depending on a smartphone, for example, smart watches or smart glasses, and includes a device that dedicated to only one type of application function and need to collaboratively work with another device such as a smartphone, for example, various smart bands, smart helmets, or smart jewelry for monitoring physical signs.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board unit, OBU).

With the advent of the big data era, each device generates a large amount of raw data in various forms every day. Traditional centralized learning requires that each edge device transmits local data to a server at a central end in a unified manner, and then use the collected data for model training and learning. However, this architecture is gradually limited by the following factors as the era develops:

(1) Edge devices are widely distributed in various regions and corners of the world. These devices will continuously generate and accumulate massive amounts of raw data at a fast speed. If the central end needs to collect raw data from all edge devices, huge communication loss and computing power requirements are inevitably caused.

(2) As actual scenarios in real life become more complex, more and more learning tasks require that the edge device can make timely and effective decisions and feedback. Traditional centralized learning involves the upload of a large amount of data, which causes a large delay. As a result, the centralized learning cannot meet the real-time requirements of actual task scenarios.

(3) Considering industry competition, user privacy security, and complex administrative procedures, centralized data integration will face increasing obstacles. Therefore, system deployment tends to store data locally, and the edge device itself completes local computing of the model.

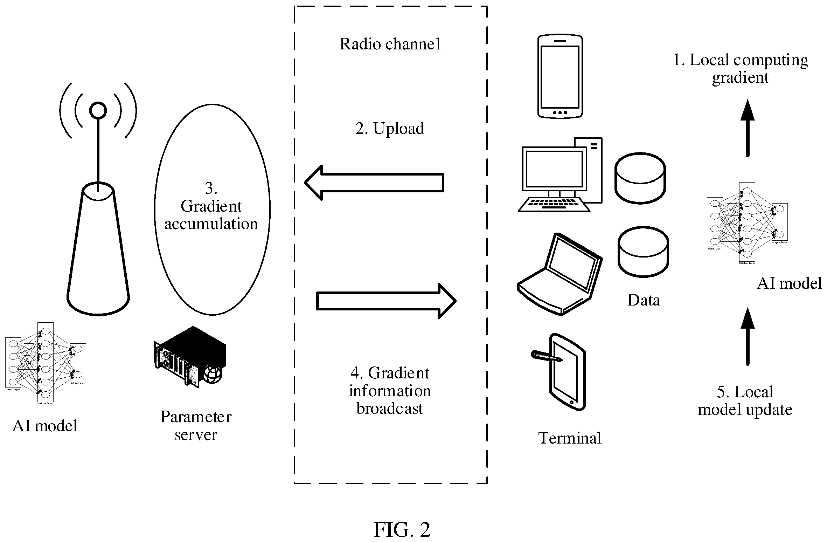

Therefore, how to design a machine learning framework while meeting data privacy, security, and regulatory requirements so that AI systems can use their own data more efficiently and accurately becomes an important issue in the current AI development. Based on this, the conventional technology proposes a federated learning architecture to resolve the foregoing problem. As shown in FIG. 2, in federated learning, each terminal device needs to train a local machine learning model by using local data, to obtain a parameter or a gradient of the local machine learning model; upload the parameter or the gradient of the local machine learning model to a central server; combine the parameter or the gradient of the local machine learning model uploaded by the terminal device by using the central server, to obtain a global machine learning model parameter; and broadcast the global machine learning model parameter to the terminal device, so that the terminal device updates the machine learning model at the terminal device side based on the global machine learning model parameter, and performs a next round of local machine learning model training. On one hand, due to limited bandwidth and transmission unreliability of a radio channel, a channel bit error occurs when a terminal uploads a gradient update. As a result, an error occurs in the received gradient update, and convergence of global model training is affected. On the other hand, a local calculation delay cannot be ignored because the computing capability of the mobile terminal is insufficient. Limited radio channel resources cause large communication overheads, and consequently, a transmission delay of uploading a gradient update by the terminal is large. Therefore, a training delay of federated learning is large.

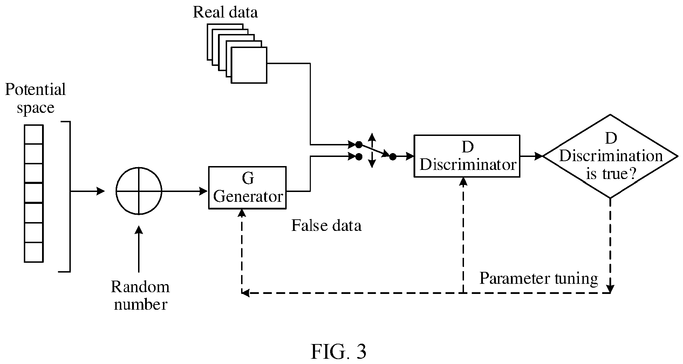

It should be noted that, a quantity of real data samples is usually limited. Therefore, a problem of a shortage of samples may be resolved by constructing virtual data samples by using a GAN. FIG. 3 shows a GAN model, where a GAN is usually composed of a generator (Generator) and a discriminator (Discriminator). The generator randomly selects a sample from a potential space as an input, outputs a false sample after processing, and requires the output false sample to simulate real sample data in a training set as much as possible. The input of the discriminator is real sample data or a false sample of the generator, and outputs a probability value that an input sample belongs to a real sample. The discriminator aims to distinguish the false sample generated by the generator from the real sample, and the generator deceives the discriminator as much as possible so that the discriminator cannot determine the authenticity of the input sample. The generator and the discriminator continuously compete with each other to adjust their respective model parameters (that is, the generator parameter and the discriminator parameter). Finally, the discriminator cannot determine whether the output sample of the generator is a real sample.

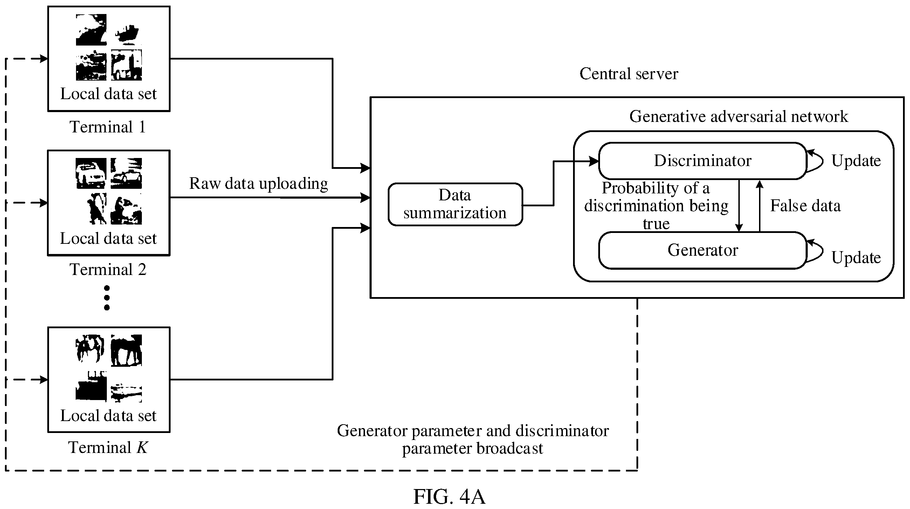

FIG. 4A shows a system for performing centralized training of a GAN. The system includes K terminal devices and one central server. Each terminal device has a specific quantity of real data samples, and a generator and a discriminator of the GAN are deployed on a server end. All terminals directly transmit local data samples, that is, original data shown in the figure, to the central server. After a global data set is obtained by summarizing the data on the server, a stochastic gradient descent method is used for training until the generator and discriminator converge. Finally, the server feeds back global generator and discriminator parameters obtained through training to all terminals by using a broadcast channel, so as to implement model sharing between all terminals and the server. However, in this solution, all terminals are required to directly transmit original data samples to the central server for centralized training. Limited by a bandwidth of the system, transmitting a large quantity of data samples causes a large transmission delay, and causes network congestion and data packet loss. In addition, original data carries user privacy information, which is vulnerable to malicious attacks from a third party during transmission.

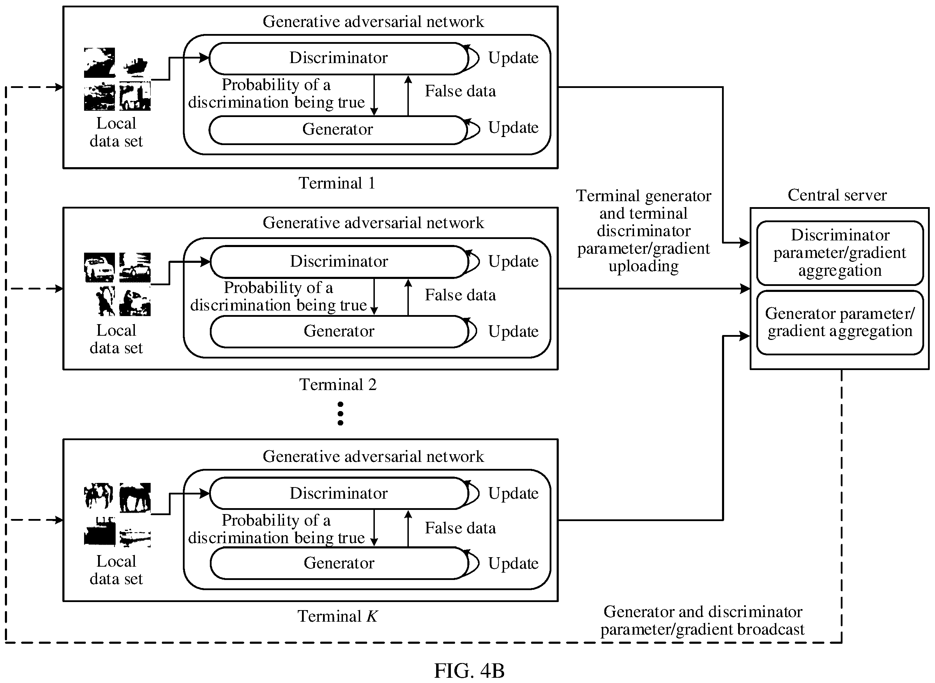

FIG. 4B shows a system for performing federated training of a GAN. The system includes K terminal devices and one central server. A generator and a discriminator of the GAN are deployed in each terminal in the system. After training of the generator and the discriminator of each terminal is completed, a generator parameter and a discriminator parameter or a corresponding gradient are uploaded to the central server. The central server aggregates these parameters, calculates an average value, and delivers the average value to each terminal. Because the training of the generator and the discriminator is completed at the terminal, the requirement for the computing power of the terminal is severe. In addition, in a system with limited bandwidth resources, uploading all parameters or gradients of the generator and the discriminator may also cause uplink congestion. In addition, a gradient compression algorithm used in gradient averaging is complex, and is difficult to deploy in an actual system. In addition, a quantization process also causes loss of gradient information to a specific extent, and also slows down a convergence rate of a model.

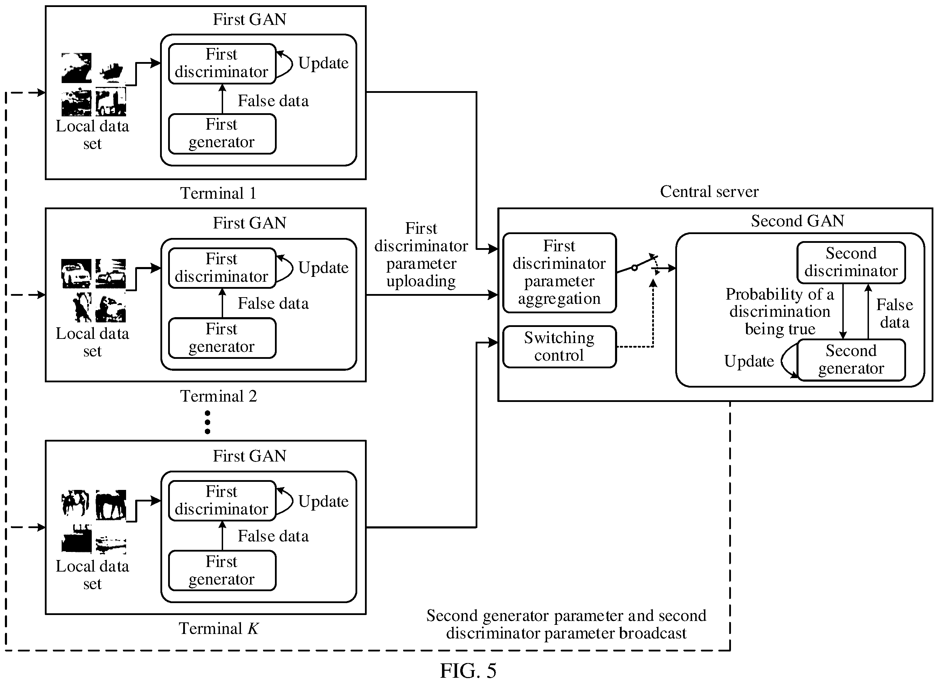

Based on this, this application provides a new machine learning system. As shown in FIG. 5, the machine learning system includes one or more first devices and a second device. A first GAN runs on the first device, a second GAN runs on the second device, the first GAN includes a first generator and a first discriminator, and the second GAN includes a second generator and a second discriminator. The first device may be a terminal device, for example, UE or a vehicle-mounted device, or may be understood as a module (for example, a chip) in the terminal device. The second device may be a network device, for example, a TRP or a gNB, or may be understood as a module (for example, a chip) in the network device. This is not specifically limited in this application. In FIG. 5, an example in which the first device is a terminal 1 to a terminal $k$, $k$ is a positive integer greater than or equal to 1, and the second device is a central server is used for illustration. However, in actual application, specific types of the first device and the second device are not limited. The terminal may collect a real sample and train the first discriminator. The central server may collect a parameter of the first discriminator from the terminal, perform aggregation based on the parameter of the first discriminator, and train the second generator after obtaining a parameter of the second discriminator. GAN training is implemented through interaction between the first device and the second device. The first device transmits the parameter of the first discriminator to the second device, so that the second device performs parameter aggregation to determine the parameter of the second discriminator, instead of transmitting local original data to the second device. This manner ensures privacy of user data of the first device, and a data amount of the parameter of the first discriminator is significantly reduced compared with transmitting the local original data. In addition, during the GAN training, an update of the parameter of the first discriminator and the parameter of the first generator is determined by using the parameter of the second discriminator and the parameter of the second generator of the second device. In this manner, data processing pressure of the first device can be reduced, and training efficiency of the GAN can be improved.

In addition, it should be noted that the first generator or the second generator may be implemented by using a neural network model. Generally, in a generator model $G(\theta, \mathbf{z})$, a random number sample $\mathbf{z}$ is input, a false data sample is output, and $\theta$ is a parameter of the generator. The random number sample may also be understood as sample noise, or may be understood as a random variable, or the like. The first discriminator or the second discriminator may also be implemented by using a neural network model. Generally, in a discriminator model $D(\varphi, d)$, an input d is a real data sample or a false data sample generated by the generator, an output is a probability of determining that the input data sample is the real data sample, and $\varphi$ is a parameter of the discriminator. Generator-oriented gradient function $g_\theta(\theta, \varphi, z) = \nabla_\theta \log D(\varphi, G(\theta, z))$, where V is a partial derivative operator. Discriminator-oriented gradient function $g_\varphi(\theta, \varphi, z, x) = \nabla_\varphi[\log D(\varphi, x) - \log D(\varphi, G(\theta, z))]$, where x is a real data sample, and application of the related function is not described in detail in the following.

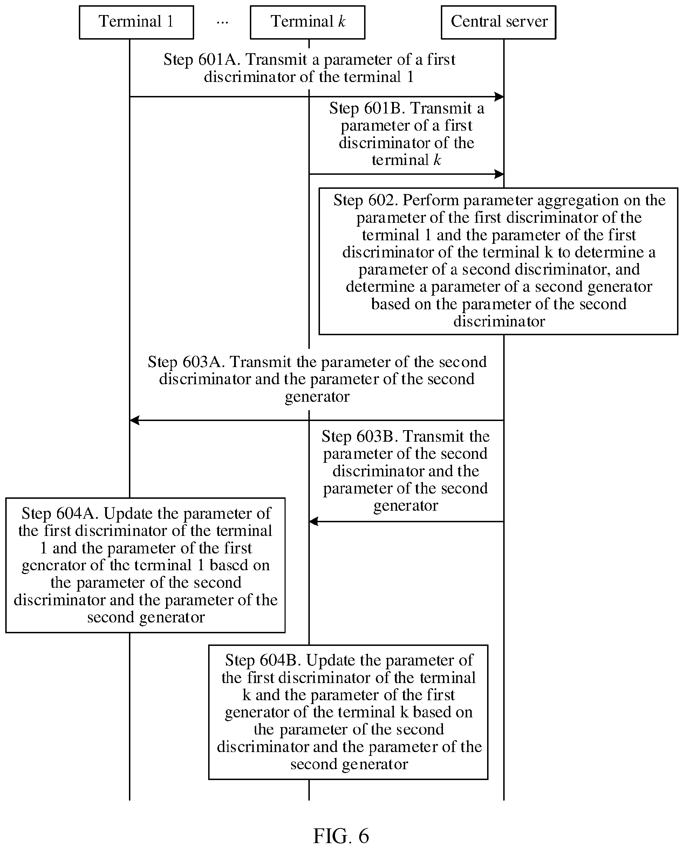

FIG. 6 is a schematic flowchart of a GAN training method according to an embodiment of this application. The method may be applied to the machine learning system shown in FIG. 5. In FIG. 6, only an example in which a first device is a terminal 1 and a terminal $k$, and a second device is a central server is used for description. During actual execution, refer to the following steps:

Step 601A: A terminal 1 transmits a parameter of a first discriminator of the terminal 1 to a central server, where the parameter of the first discriminator is determined by the terminal 1 based on local data and a parameter of a first generator of the terminal 1.

Step 601B: A terminal $k$ transmits a parameter of a first discriminator of the terminal $k$ to a central server, where the parameter of the first discriminator is determined by the terminal $k$ based on local data and a parameter of a first generator of the terminal $k$.

Step 601A and step 601B are not performed in a sequence. Step 601A may be performed before step 601B, or step 601B may be performed before step 601A, or step 601A and step 601B may be performed simultaneously. This is not specifically limited in this application.

Correspondingly, the central server receives the parameter of the first discriminator of the terminal 1 and the parameter of the first discriminator of the terminal $k$.

It should be noted that, before step 601A and step 601B are performed, a current parameter $\theta$ of a second generator and a current parameter $\varphi$ of a second discriminator need to be first obtained from the central server. $\theta$ is used as an initial value of a parameter of the first generator, and $\varphi$ is used as an initial value of a parameter of the first discriminator. Then, the first discriminator of each terminal determines the parameter of the first discriminator based on local data (that is, a real data sample) and the parameter of the first generator. In addition, the parameter of the first discriminator may be determined by the first device based on the local data, the parameter of the first generator, and a first random number sample set. That is, the terminal may input a first random number sample to the first generator that uses the parameter of the first generator as a parameter to obtain "false" data, and then the "false" data and real data, that is, local data, are input into the first discriminator, and the first discriminator is trained, to obtain the parameter of the first discriminator. During actual execution, the terminal may select some data from a local data set as samples, randomly select a same quantity of random number samples from a random number sample space, and interact with the server end to keep using a same noise sample as the server end. Then, the terminal updates a first discriminator model using the random gradient descent algorithm, and outputs an updated parameter of the first discriminator. Reference may be made to the following algorithm, but it is not limited that only the following algorithm 1 is used to determine the parameter of the first discriminator. The following uses parameter update of the first discriminator of the terminal $k$ as an example for description.

The parameter of the first discriminator of the terminal $k$ is determined in the following manner:

    1. Input a parameter $\theta$ of the second generator and a parameter $\varphi$ of the second discriminator.
    2. Select a quantity of iterations $n_d$ for random gradient descent.
    3. Select a quantity of training samples $m_k$.
    4. Set $\varphi_{k,0} = \varphi$.
    5. When $j = 1, \ldots, n_d$, execute the loop.

Sampling is performed from the random number sample space and the local data set to obtain a random number sample sequence $\left(\mathbf{z}_{k,j,i}\right)_{i=1,\ldots,m_k}$ and a data sequence $\left(\mathbf{x}_{k,j,i}\right)_{i=1,\ldots,m_k}$.

Calculate:

$$\varphi_{k,j} = \varphi_{k,j-1} - \eta \frac{1}{m_k} \sum_{i=1}^{m_k} \mathrm{g}_\varphi\left(\theta, \varphi_{k,j-1}, \mathrm{z}_{k,j,i}, \mathrm{x}_{k,j,i}\right).$$

End the loop.

6. Output $\varphi_{k,n_d}$, which is a parameter of the first discriminator output by the terminal $k$ after $n_d$ iterations.

$x_{k,j,i}$ is an ith real data sample used in a $j$th round of training of a discriminator on the terminal $k$, $z_{k,j,i}$ is an $i$th random sample sequence used in the jth round of training of the discriminator on the terminal k, $m_k$ is a quantity of samples used in training of the discriminator on the terminal $k$, $\eta$ is a learning rate, $\varphi_{k,j}$ is a parameter of the first discriminator output by the terminal $k$ after $j$ iterations, and $\varphi_{k,j}$ indicates a difference between the parameter of the first discriminator output by the terminal $k$ and a gradient function of the first discriminator of the terminal $k$ after j-1 iterations.

Step 602: The central server performs parameter aggregation on the parameter of the first discriminator of the terminal 1 and the parameter of the first discriminator of the terminal k to determine a parameter of the second discriminator, and determines a parameter of the second generator based on the parameter of the second discriminator.

In an optional embodiment, the parameter of the second generator is determined by the second device based on the parameter of the second discriminator and a second random number sample set, where the second random number sample set is the same as a union set of first random number sample sets of X first devices, and the X first devices each transmit the parameter of the first discriminator to the second device, where X is a positive integer greater than or equal to 1. The second random number sample set is the same as a union set of first random number sample sets of the X first devices, so that training efficiency of the GAN can be improved.

It should be noted that the central server may be communicatively connected to a plurality of terminals. The central server may preset a scheduling rule, and select parameters of first discriminators of some terminals for aggregation, and then train a current second generator. The scheduling rule may be round-robin scheduling, for example, grouping a plurality of terminals, first receiving a parameter of a first discriminator of a first group of terminals to train a second generator, and then receiving a parameter of a first discriminator of a second group of terminals to train a second generator until all group terminals are scheduled, or may be global scheduling, where parameters of first discriminators of all terminals are used for training a second generator, or may be importance scheduling, and all terminals are queued according to importance of their data, using a parameter of a first discriminator of a terminal of high importance for training of a second generator. The central server collects a parameter of a first discriminator from a scheduled terminal, and performs aggregation to obtain a model of a second discriminator. Generally, GAN training needs to be implemented by through a plurality of training rounds. The following uses an example in which one training round schedules $|S|$ ($|S|$ indicates a quantity of elements included in a set $S$) terminals and weighted averaging is used for description. A specific operation algorithm 2 may be as follows, but a specific execution algorithm is not specifically limited in actual application.

> 1. Input a parameter $\varphi_k$ of a first discriminator of a terminal and a quantity of training samples $m_k$, where S is a set of scheduled terminals.
> 2. Calculate:

$$\varphi' = \frac{1}{\sum_{k \in S} m_k} \sum_{k \in S} m_k \varphi_k.$$

> 3. Output $\varphi'$, where $\varphi'$ is a parameter of a second discriminator obtained by the central server by aggregating a parameter of a first discriminator of each terminal and a training sample corresponding to each terminal.

Then, the central server interacts with the scheduled terminal, keeps using a same random number sample set as the scheduled terminal, runs a random gradient descent algorithm, updates the second generator model, and outputs an updated parameter of the second generator. An update algorithm 3 of the generator is as follows. However, in actual application, an execution algorithm is not specifically limited.

> 1. Input initial parameters of the second generator model $G(\theta, \mathbf{z})$ and the second discriminator model $\varphi$.
> 2. Select a quantity of iterations $n_g$.
> 3. Select a quantity of random number samples $M = \Sigma_{k \in S} m_k$ for training. The random number sample is the same as a union set of the random number samples used by the scheduled terminal to generate the parameter of the first discriminator.
> 4. Set $\theta_0 = \theta$.
> 5. When $j = 1, \ldots, n_g$, execute the loop.

Sampling is performed in a noise space to obtain a noise sequence $(z_{j,i})_{i=1,\ldots,M}$.
Calculate:

$$\theta_j = \theta_{j-1} - \eta \frac{1}{M} \sum_{i=1}^{M} g_\theta(\theta_{j-1}, \varphi, z_{j,i}).$$

End the loop.
$g_\theta(\theta_{j-1}, \varphi, z_{j,i})$ is an ith gradient of the second generator calculated according to a second generator parameter $\theta_{j-1}$ of the central server, a second discriminator parameter $\varphi$ of the central server, and an ith noise sequence $z_{j,i}$ after a (j-1)th round of training. An average gradient of the second generator may be obtained by averaging all M gradients, that is,

$\frac{1}{M} \Sigma_{i=1}^{M} g_\theta(\theta_{j-1}, \varphi, z_{j,i})$. The second generator parameter is updated from $\theta_{j-1}$ to $\theta_j$ based on an average gradient and a learning rate $\eta$ of the second generator.

6. Output $\theta_{n_g}$, where $\theta_{n_g}$ is a parameter of the second generator that is obtained by the central server after $n_g$ iterations.
In step 5, the average gradient of the second generator is determined based on the aggregated parameter of the second discriminator. Therefore, the method is simpler and faster, and data calculation efficiency is higher.
It should be further noted that when the algorithm 3 is executed after the algorithm 2, the initial parameter of the second discriminator is an aggregated discriminator parameter determined in the algorithm 2 in the current training round, that is, $\varphi'$. When the algorithm 3 is executed before the algorithm 2, the initial parameter of the second discriminator is an aggregated discriminator parameter determined in the algorithm 2 in the previous training round.
In addition, it should be further noted that the foregoing method for determining the parameter of the second generator is not limited to the algorithm 3. After obtaining the parameter of the first discriminator of each terminal, the central server may also determine the parameter of the second generator based on an unaggregated parameter of the first discriminator. The following may be performed with reference to an algorithm 4:

1. Input an initial parameter $\theta$ of the second generator and a parameter $\varphi_k$ of the first discriminator of the terminal k, where $\varphi_k$.
2. Select a quantity of iterations $n_g$.
3. Select a quantity of random samples M = $\Sigma_{k \in S}$ $m_k$ for training. The random number sample set is the same as a union set of the random number samples used by the scheduled terminal to generate the parameter of the first discriminator.
4. Set $\theta_0 = \theta$.
5. When $j = 1, \ldots, n_g$, execute the loop.

Sampling is performed in a noise space to obtain a noise sequence $(z_{j,i})_{i=1,\ldots,M}$.
Calculate:

$$\theta_j = \theta_{j-1} - \eta \frac{1}{M} \sum_{i=1}^{M} \nabla_\theta \log \left( 1 - \frac{1}{|S|} \sum_{k \in S} D\left( \varphi_k, G(\theta_{j-1}, z_{j,i}) \right) \right).$$

End the loop.
|S| represents a quantity of scheduled terminals. |S|is an ith piece of generated data generated according to the second generator parameter $\theta_{j-1}$ of the central server and the ith noise sequence $z_{j,i}$ after the (j-1)th round of training. D ($\varphi_k$, G($\theta_{j-1}$, $z_{j,i}$)) is a kth discrimination result obtained by performing discrimination on the ith piece of generated data based on a first discriminator parameter $\varphi_k$ of a kth terminal. Discrimination results obtained based on first discriminator parameters of all |S| terminals are averaged, so as to obtain an integrated discrimination result $1 - \frac{1}{|S|}\Sigma_{k \in S} D\left(\varphi_k, G(\theta_{j-1}, z_{j,i})\right)$ for the ith piece of generated data. A gradient $\nabla_\theta \log\left(1 - \frac{1}{|S|}\Sigma_{k \in S} D\left(\varphi_k, G(\theta_{j-1}, z_{j,i})\right)\right)$ is calculated based on an integrated discrimination result of all M pieces of generated data, and the gradient is averaged, to obtain an integrated gradient $\frac{1}{M}\Sigma_{i=1}^{M} \nabla_\theta \log\left(1 - \frac{1}{|S|}\Sigma_{k \in S} D\left(\varphi_k, G(\theta_{j-1}, z_{j,i})\right)\right)$ of the second generator. The second generator parameter is updated from $\theta_{j-1}$ to $\theta_j$ based on the integrated gradient and a learning rate $\eta$ of the second generator.

6. Output $\theta_{n_g}$, where $\theta_{n_g}$ is a parameter of the second generator that is obtained by the central server after $n_g$ iterations.
In step 5, the integrated gradient of the second generator is determined based on information about each first discriminator parameter. Therefore, in this manner, the information about each first discriminator parameter may be separately considered, the considered information is more comprehensive, and the determined parameter of the second generator is more reliable.
Step 603A: The central server transmits the parameter of the second discriminator and the parameter of the second generator to the terminal 1.
Step 603B: The central server transmits the parameter of the second discriminator and the parameter of the second generator to the terminal k.
Step 603A and step 603B are not performed in a sequence. Step 603A may be performed before step 603B, or step 603B may be performed before step 603A, or step 603A and step 603B may be performed simultaneously. This is not specifically limited in this application.
Correspondingly, the terminal 1 receives the parameter of the second discriminator and the parameter of the second generator of the central server, and the terminal k receives the parameter of the second discriminator and the parameter of the second generator of the central server.
Step 604A: The terminal 1 updates the parameter of the first discriminator of the terminal 1 and the parameter of the first generator of the terminal 1 based on the parameter of the second discriminator and the parameter of the second generator.

Step 604B: The terminal k updates the parameter of the first discriminator of the terminal k and the parameter of the first generator of the terminal k based on the parameter of the second discriminator and the parameter of the second generator.

Step 604A and step 604B are not performed in a sequence. Step 604A may be performed before step 604B, or step 604B may be performed before step 604A, or step 604A and step 604B may be performed simultaneously. This is not specifically limited in this application.

In addition, it should be further noted that, in an actual application, a location of the terminal changes flexibly. After reporting the parameter of the first discriminator to the central server, the terminal may move to a range that cannot be covered by the central server. Therefore, the central server may not deliver the parameter of the second discriminator and the parameter of the second generator to such terminal. In addition, a coverage area of the central server may include a plurality of terminals. After some terminals upload the parameter of the first discriminator of the terminal, the central server may deliver the parameter of the second discriminator and the parameter of the second generator to all the terminals. In this way, training efficiency of a first GAN of the terminal can be improved, and convergence of the GAN can be accelerated. That is, although only the terminal 1 and the terminal k transmit the parameter of the first discriminator, the central server may further deliver the parameter of the second discriminator and the parameter of the second generator to another terminal except the terminal 1 and the terminal k, so that another terminal can accelerate training of the first GAN.

In an optional embodiment, to ensure that a first random number sample set of the terminal is synchronized with a second random number sample set of the central server, the terminal may transmit random number sample synchronization information to the central server, or the central server may transmit random number sample synchronization information to the terminal. To ensure random number sample synchronization between the terminal and the central server, the synchronization may be implemented in the following manner. However, in actual application, only the following manner is used to synchronize random number samples.

Manner 1: Determine based on a same pseudo-random algorithm

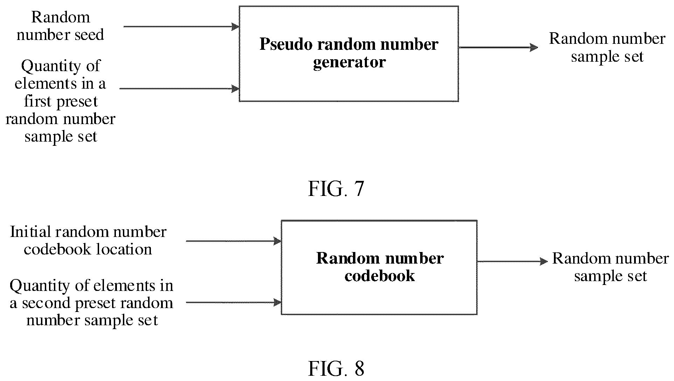

FIG. 7 is a schematic diagram of generating a random number sample based on a pseudo random generator. After a random number seed and a quantity of elements in a first preset random number sample set are input into the pseudo random generator, a random number sample set may be output. The pseudo random generator may be implemented by a neural network model. The following uses an example in which a terminal transmits random number sample synchronization information for description. The following may be performed:

Step 1: Deploy a same pseudo random number generator (which may be given by a communication standard or may be agreed in advance) on all terminals and a central server.

Step 2: A terminal k randomly selects one random number seed, and determines a quantity $m_k$ of elements in a required random number sample set.

Step 3: The terminal k inputs the random number seed and the quantity $m_k$ of elements in the required random number sample set into a local pseudo random number generator, to obtain $m_k$ noise samples, that is, the first random number sample set.

Step 4: The terminal uploads the random number sample synchronization information to the central server, where the random number sample synchronization information includes the random number seed and the quantity $m_k$ of required random number samples.

Step 5: The central server inputs the random number seed and the quantity $m_k$ of required random number samples that are included in the received random number sample synchronization information into the pseudo random number generator of the central server, to obtain a noise sample that is the same as that of the terminal k. The operation is performed on random number seeds sent by all scheduled terminals and the quantity of required random number samples, to finally obtain $M = \Sigma_{k \in S} m_k$ noise samples, where $S$ is a set of scheduled terminals.

In addition, the foregoing step 4 may be performed after step 2, that is, before step 3 or performed at the same time with step 3.

In the following, an example in which a central server transmits random number sample synchronization information is used for description, and the following may be performed:

Step 1: Deploy a same pseudo random number generator (which may be given by a communication standard or may be agreed in advance) on all terminals and a central server.

Step 2: The central server randomly selects a random number seed whose quantity is the same as that of scheduled terminals, and determines a quantity $m_k$, $k \in S$ of random number samples required by each scheduled terminal, where $S$ is a set of scheduled terminals.

Step 3: The central server inputs all random number seeds and a corresponding quantity $m_k$, $k \in S$ of required random number samples into a local pseudo random number generator, to obtain $M = \Sigma_{k \in S} m_k$ noise samples, that

is, a second random number sample set.

Step 4: The central server delivers $k$th random number sample synchronization information to a terminal $k$, where the $k$th random number sample synchronization information includes a $k$th random number seed and the quantity $m_k$ of required random number samples.

Step 5: The terminal k inputs the received random number seed and a quantity $m_k$ of required noise samples into a pseudo random number generator of the terminal k, to obtain a random number sample that is the same as that of the server.

In addition, the foregoing step 4 may be performed after step 2, that is, before step 3 or performed at the same time with step 3.

In this manner, a pseudo-random generator is deployed in both the terminal and the central server, to perform same data calculation to determine the random number sample set. In this manner, a data storage amount is small.

Manner 2: Determine based on a same random codebook

FIG. 8 is a schematic diagram of generating a random number sample based on a random number codebook. After an initial location of the random number codebook and a quantity of elements in a second preset random number sample set are determined, the random number codebook may be queried to determine a random number sample set. The following uses an example in which a terminal transmits random number sample synchronization information for description. The following may be performed:

Step 1: Deploy a same random number codebook (which may be given by a communication standard or may be agreed in advance) on all terminals and a central server, and provide a codeword query rule (which may be given by the standard or may be agreed in advance).

Step 2: A terminal $k$ randomly selects an initial codebook location, and specifies a quantity $m_k$ of elements in a required random number sample set.

Step 3: The terminal $k$ obtains $m_k$ random number samples, that is, a first random number sample set, by querying a local random number codebook according to the initial codebook location and the quantity $m_k$ of the elements in the random number sample set.

Step 4: The terminal $k$ uploads random number sample synchronization information to the central server, where the random number sample synchronization information includes the initial codebook location selected by the terminal $k$ and the quantity $m_k$ of the elements in the required random number sample set.

Step 5: The central server queries the random number codebook according to the initial codebook location included in the received random number sample synchronization information and the quantity $m_k$ of the elements in the required random number sample set, to obtain a random number sample that is the same as that of the terminal $k$. The operation is performed on the received initial codebook location and quantity of required samples included in the random number sample synchronization information sent by all scheduled terminals, to finally obtain $M = \Sigma_{k \in S}$ $m_k$ random number samples, where $S$ is a set of scheduled terminals.

In addition, the foregoing step 4 may be performed after step 2, that is, before step 3 or performed at the same time with step 3.

In the following, an example in which a central server transmits random number sample synchronization information is used for description, and the following may be performed:

Step 1: Deploy a same random number codebook (which may be given by a communication standard or may be agreed in advance) on all terminals and a server, and provide a codeword query rule (which may be given by the standard or may be agreed in advance).

Step 2: The central server randomly selects an initial codebook location whose quantity is the same as a quantity of scheduled terminals, and determines a quantity $m_k$, $k \in S$ of elements in a random number sample set required by each scheduled terminal, where $S$ is a set of scheduled terminals.

Step 3: The central server inputs all initial codebook locations and the quantity $m_k$, $k \in S$ of the elements in the corresponding required random number sample set into a local random number codebook, to obtain $M = \Sigma_{k \in S} m_k$ random number samples, that is, a second random number sample set.

Step 4: The central server delivers a $k$th piece of random number sample synchronization information to a terminal $k$, where the $k$th piece of random number sample synchronization information includes a $k$th initial codebook location and a quantity $m_k$ of elements in a required random number sample set.

Step 5: The terminal $k$ inputs the received initial codebook location and the quantity $m_k$ of the elements in the required random number sample set into a local random number codebook of the terminal $k$, to obtain a random number sample that is the same as that of the central server.

Similarly, step 4 may be performed after step 2, that is, before step 3 or performed at the same time with step 3.

In this manner, the central server and the terminal only need to store the random number codebook, and synchronously query the random number codebook set in the random number sample. This manner is easy to operate and has a fast execution speed.

In an optional embodiment, a parameter of a second generator on a central server side may be updated synchronously with a parameter of a first discriminator on a terminal side, or may be updated alternately. An update sequence is not specifically limited herein in this application.

It should be noted that, during a synchronous update, if the parameter of the first discriminator is updated M times, where M is a positive integer greater than or equal to 1, an ith update of the parameter of the first discriminator is determined by the terminal based on local data, an ith updated parameter of the first generator, and a first random number sample set, where i is any integer from 1 to M.

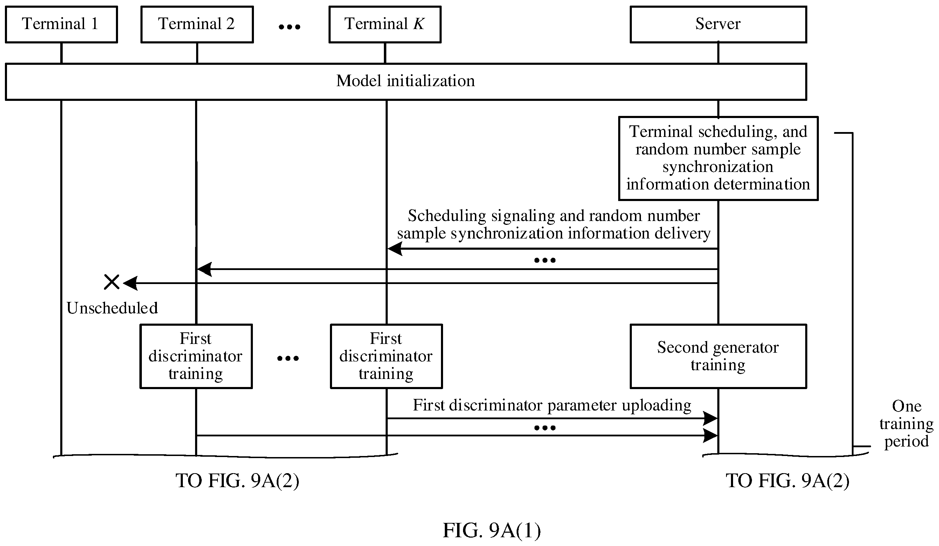

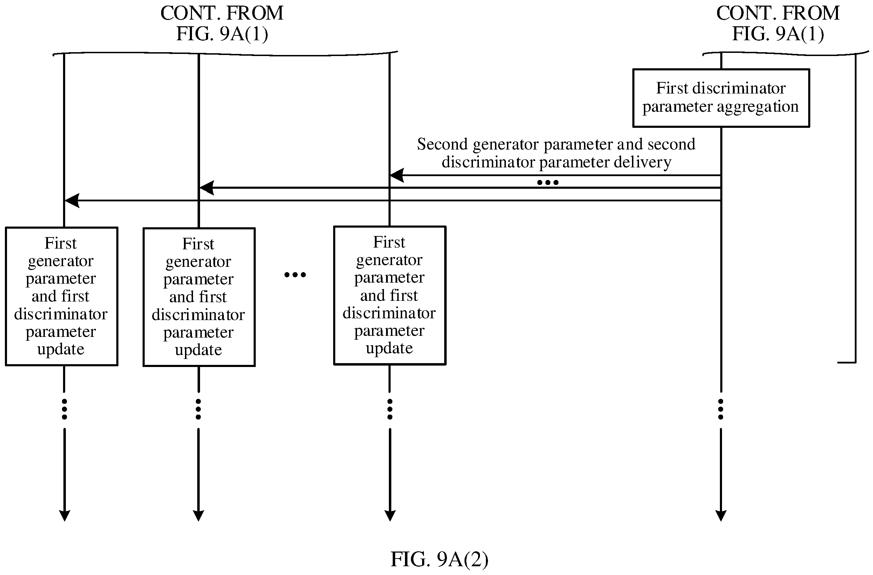

FIG. 9A(1) and FIG. 9A(2) are a schematic diagram of transmitting random sample synchronization information by a central server during a synchronous update, which may be performed as follows:

Step 1: A discriminator model and a generator model are initialized, and a terminal and a central server obtain a same initialized model (the terminal may obtain the same initialized model from the central server, or may obtain the same initialized model from a third party, which is not specifically limited herein). The initialization of the discriminator model and the generator model includes initialization of a first discriminator model, initialization of a first generator model, initialization of a second discriminator model, and initialization of a second generator model.

Step 2: The central server performs terminal scheduling based on a given scheduling algorithm (a scheduling algorithm that is widely used currently, such as round-robin scheduling and global scheduling, may be used), and selects a terminal to be scheduled in this round. In addition, the random number sample synchronization information is determined, including a random number seed/an initial codebook location and a quantity of random number samples.

Step 3: The central server delivers scheduling and random number synchronization information, indicates a scheduled terminal to participate in this round of training, and notifies each scheduled terminal of the random number seed/initial codebook location and the quantity of the random number samples used by each scheduled terminal.

Step 4: The scheduled terminal generates a random number sample based on the random number seed/initial codebook location and the quantity of the random number samples, and trains the first discriminator based on a local real data sample, the random number sample, and the first generator, to obtain a new parameter of the first discriminator. In addition, the central server generates a random number sample based on the random number seed/initial codebook location and the quantity of random number samples, and trains the second generator based on the parameter of the second discriminator and the random number sample, to obtain a new parameter of the second generator.

Step 5: The scheduled terminal uploads, to the central server, the parameter of the first discriminator obtained in this round of training.

Step 6: The central server receives the parameter of the first discriminator uploaded by the scheduled terminal, and performs parameter aggregation of the first discriminator to obtain a new parameter of the second discriminator.

Step 7: The central server delivers the updated parameter of the second generator and the updated parameter of the second discriminator to all terminals. (A preferred solution of this step is to deliver the parameter of the second generator and the parameter of the second discriminator to all terminals. Another feasible solution is to deliver the parameter of the second generator and the parameter of the second discriminator to only the scheduled terminal, but performance is reduced.)

Step 8: Each terminal receives the parameter of the second generator and the parameter of the second discriminator, and updates the parameter of the first generator and the parameter of the first discriminator.

Step 9: Repeat step 2 to step 8 until the convergence condition is met (a maximum quantity of training rounds is met, or model performance meets the preset threshold).

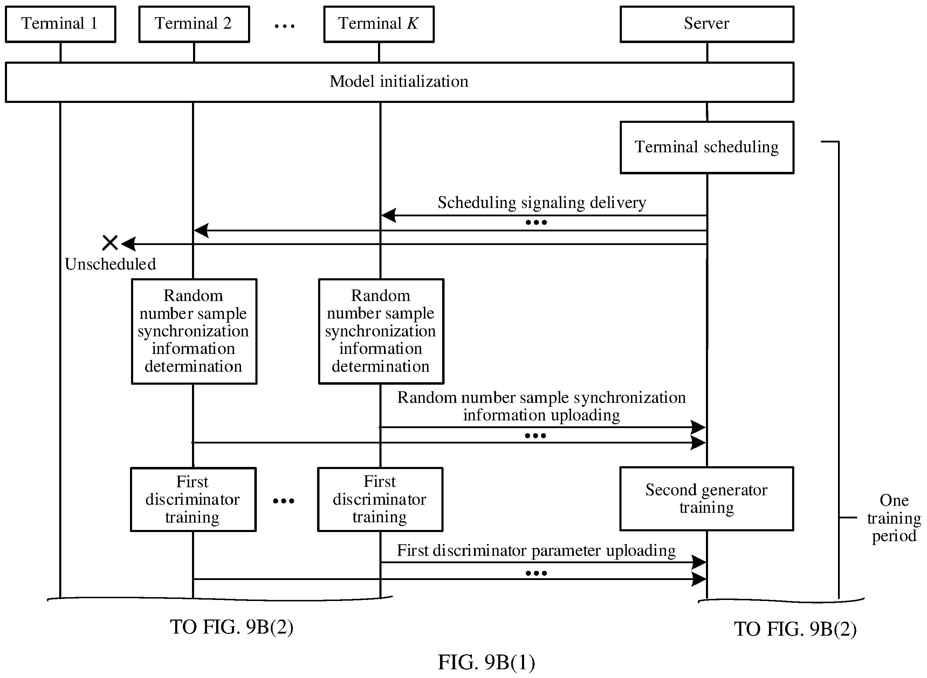

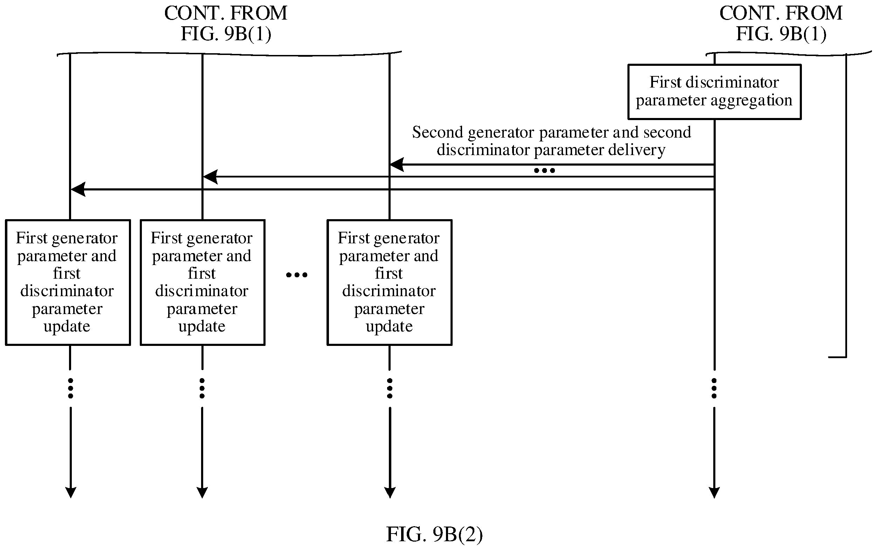

FIG. 9B(1) and FIG. 9B(2) are a schematic diagram of transmitting random sample synchronization information by a terminal during a synchronous update, and may be performed as follows:

Step 1: A discriminator model and a generator model are initialized, and a terminal and a central server obtain a same initialized model (the terminal may obtain the same initialized model from the central server, or may obtain the same initialized model from a third party, which is not specifically limited herein). The initialization of the discriminator model and the generator model includes initialization of a first discriminator model, initialization of a first generator model, initialization of a second discriminator model, and initialization of a second generator model.

Step 2: The central server performs terminal scheduling based on a given scheduling algorithm (a scheduling algorithm that is widely used currently, such as round-robin scheduling and proportional fairness scheduling, may be used), and selects a terminal to be scheduled in this round.

Step 3: The central server delivers scheduling signaling to indicate the scheduled terminal to participate in this round of training.

Step 4: The scheduled terminal determines a random number seed/an initial codebook location and a quantity of random number samples, and reports the random number seed/initial codebook location and the quantity of the random number samples to the central server.

Step 5: The scheduled terminal generates a random number sample based on the random number seed/initial codebook location and the quantity of the random number samples, and trains the first discriminator based on a local real data sample, the random number sample, and the parameter of the first generator, to obtain a new parameter of the first discriminator. In addition, the central server generates a random number sample based on the random number seed/initial codebook location and the quantity of random number samples, and trains the second generator based on the second discriminator, the random number sample and the second generator, to obtain a new parameter of the second generator.

Step 6: The scheduled terminal uploads, to the central server, the parameter of the first discriminator obtained in this round of training.

Step 7: The central server receives the parameter of the first discriminator uploaded by the scheduled terminal, and performs parameter aggregation of the first discriminator to obtain the parameter of the second discriminator.

Step 8: The central server delivers the updated parameter of the second generator and the updated parameter of the second discriminator to all terminals. (A preferred solution of this step is to deliver the parameter of the second generator and the parameter of the second discriminator to all terminals. Another feasible solution is to deliver the parameter of the second generator and the parameter of the second discriminator to only the scheduled terminal, but performance is reduced.)

Step 9: Each terminal receives the parameter of the second generator and the parameter of the second discriminator, and updates the parameter of the first generator and the parameter of the first discriminator.

Step 10: Repeat step 2 to step 9 until the convergence condition is met (a maximum quantity of training rounds is met, or model performance meets the preset threshold).

In the "simultaneous update" training mechanism provided in this embodiment, the first device and the second device simultaneously perform training based on a same group of model parameters before update, so that parallel model update of the first discriminator of the first device and the second generator of the second device can be implemented, and a delay of each round of training can be effectively reduced. In a system with limited computing and sufficient communication (such as a broad-band sensor network), the "synchronous update" training mechanism can effectively accelerate the training process.

In an optional embodiment, during an alternating update, if the parameter of the first discriminator is updated for M times, where M is a positive integer greater than or equal to 1, an (i+1)th update of the parameter of the first discriminator is determined by the first device based on local data, an ith updated parameter of the first generator, and a first random number sample set, where i is any integer from 1 to (M-1).

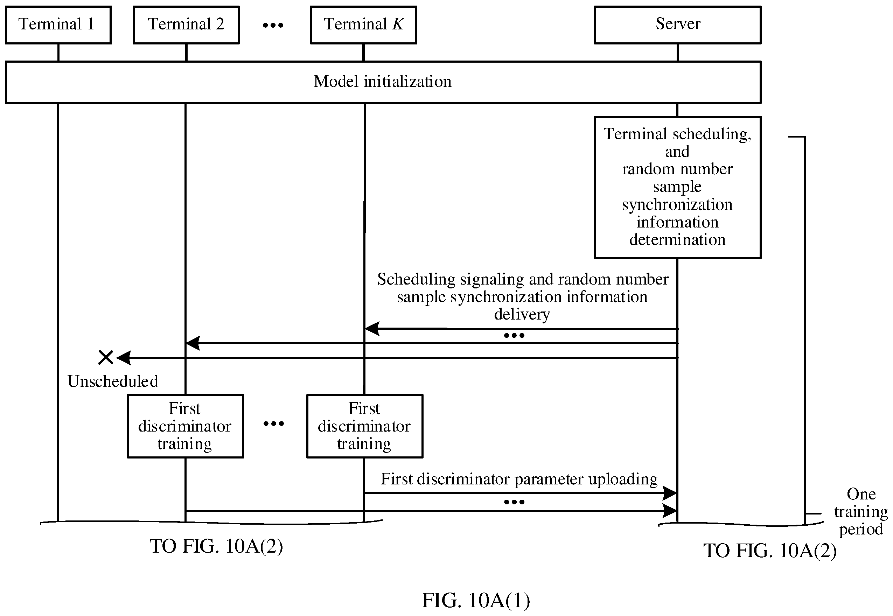

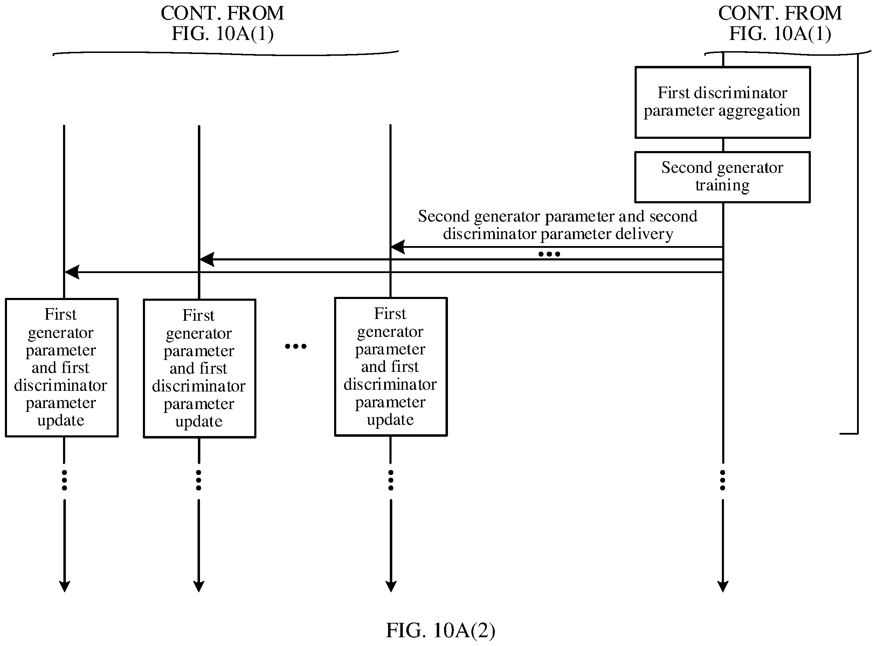

FIG. 10A(1) and FIG. 10A(2) are a schematic diagram of transmitting random sample synchronization information by a central server during an alternating update, which may be performed as follows:

Step 1: A discriminator model and a generator model are initialized, and a terminal and a central server obtain a same initialized model (the terminal may obtain the same initialized model from the central server, or may obtain the same initialized model from a third party, which is not specifically limited herein). The initialization of the discriminator model and the generator model includes initialization of a first discriminator model, initialization of a first generator model, initialization of a second discriminator model, and initialization of a second generator model.

Step 2: The central server performs terminal scheduling based on a given scheduling algorithm (a scheduling algorithm that is widely used currently, such as round-robin scheduling and proportional fairness scheduling, may be used), and selects a terminal to be scheduled in this round. In addition, the random number sample synchronization information is determined, including a random number seed/an initial codebook location and a quantity of random number samples.

Step 3: The central server delivers scheduling and random number sample synchronization information, indicates a scheduled terminal to participate in this round of training, and notifies each scheduled terminal of the random number seed/initial codebook location and the quantity of the random number samples used by each scheduled terminal.

Step 4: The scheduled terminal generates a random number sample based on the random number seed/initial codebook location and the quantity of the random number samples, and trains the first discriminator based on a local real data sample, the random number sample, and the first generator, to obtain a new parameter of the first discriminator.

Step 5: The scheduled terminal uploads, to the central server, the updated parameter of the first discriminator.

Step 6: The central server performs parameter aggregation of the first discriminator to obtain an updated parameter of the second discriminator.

Step 7: The central server generates a noise sample based on the random number seed/initial codebook location and the quantity of the random number samples, and trains the second generator based on the updated parameter of the second discriminator and the random number sample, to obtain a new parameter of the second generator.

Step 8: The central server delivers the updated parameter of the second generator and the updated parameter of the second discriminator to all terminals. (A preferred solution of this step is to deliver the parameter of the second generator and the parameter of the second discriminator to all terminals. Another feasible solution is to deliver the parameter of the second generator and the parameter of the second discriminator to only the scheduled terminal, but performance is reduced.)

Step 9: Each terminal receives the parameter of the second generator and the parameter of the second discriminator, and updates the parameter of the first generator and the parameter of the first discriminator.

Step 10: Repeat step 2 to step 9 until the convergence condition is met (a maximum quantity of training rounds is met, or model performance meets the preset threshold).

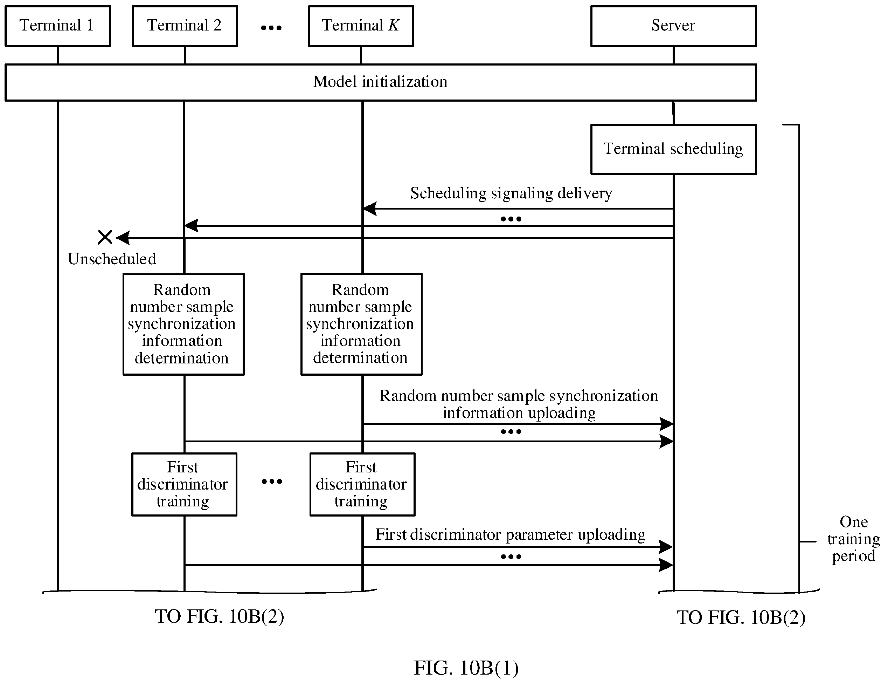

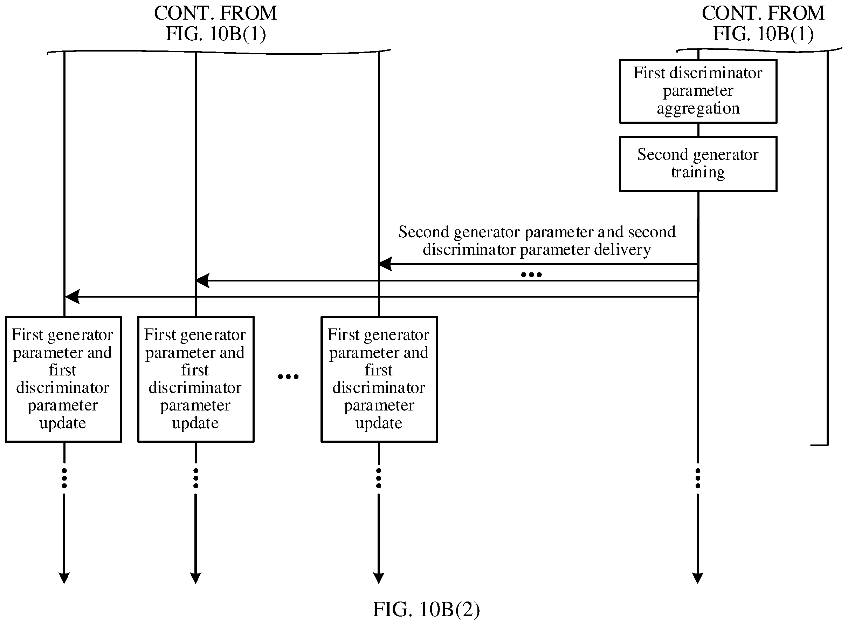

FIG. 10B(1) and FIG. 10B(2)\ are a schematic diagram of transmitting random sample synchronization information by a terminal during an alternating update, and may be performed as follows:

Step 1: A discriminator model and a generator model are initialized, and a terminal and a central server obtain a same initialized model (the terminal may obtain the same initialized model from the central server, or may obtain the same initialized model from a third party, which is not specifically limited herein). The initialization of the discriminator model and the generator model includes initialization of a first discriminator model, initialization of a first generator model, initialization of a second discriminator model, and initialization of a second generator model.

Step 2: The central server performs terminal scheduling based on a given scheduling algorithm (a scheduling algorithm that is widely used currently, such as round-robin scheduling and proportional fairness scheduling, may be used), and selects a terminal to be scheduled in this round.

Step 3: The central server delivers scheduling signaling to indicate the scheduled terminal to participate in this round of training.

Step 4: The scheduled terminal determines a random number seed/an initial codebook location and a quantity of random number samples, and reports the random number seed/initial codebook location and the quantity of the random number samples to the central server.

Step 5: The scheduled terminal generates a random number sample based on the random number seed/initial codebook location and the quantity of the random number samples, and trains the first discriminator based on a local real data sample, the random number sample, and the parameter of the first generator, to obtain a new parameter of the first discriminator.

Step 6: The scheduled terminal uploads, to the central server, the parameter of the first discriminator obtained in this round of training.

Step 7: The central server receives the parameter of the first discriminator uploaded by the scheduled terminal, and performs parameter aggregation of the first discriminator to obtain the parameter of the second discriminator.

Step 8: The central server generates a random number sample based on the random number seed/initial codebook location and the quantity of random number samples, and trains the second generator based on the second discriminator, the random number sample, and the second generator, to obtain a new parameter of the second generator.

Step 9: The central server delivers the updated parameter of the second generator and the updated parameter of the second discriminator to all terminals. (A preferred solution of this step is to deliver the parameter of the second generator and the parameter of the second discriminator to all terminals. Another feasible solution is to deliver the parameter of the second generator and the parameter of the second discriminator to only the scheduled terminal, but performance is reduced.)

Step 10: Each terminal receives the parameter of the second generator and the parameter of the second discriminator, and updates the parameter of the first generator and the parameter of the first discriminator.

Step 11: Repeat step 2 to step 10 until the convergence condition is met (a maximum quantity of training rounds is met, or model performance meets the preset threshold).

In the "alternating update" training mechanism provided in this embodiment, a manner in which the first discriminator of the first device and the second generator of the second device "counteract" each other for training can effectively improve a performance gain of a model in each training period, thereby reducing a total quantity of training periods required for model convergence, and greatly reducing communication overheads between the first device and the second device. In a system with limited communication and sufficient computing (such as a narrow-band cellular system), the "alternating update" training mechanism can effectively accelerate the training process.

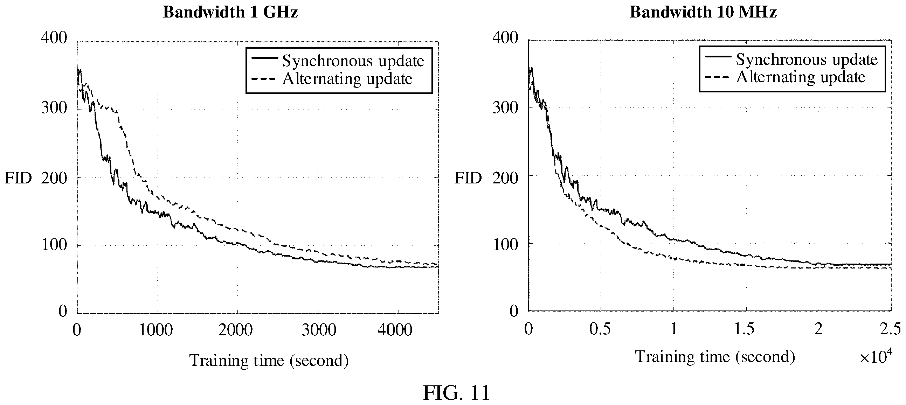

Considering the foregoing synchronous update and alternating update, in this application, a simulation experiment is performed by using a GAN that is jointly trained by a central server and 10 terminals, to obtain a simulation result shown in FIG. 11. A classic facial data set is used as a dataset. All data is randomly divided into 10 copies and allocated to all terminals. A performance index of the system is indicated by Frechet inception distance (Frechet inception distance, FID), which reflects a difference between a false sample and a real data sample generated by a trained generator. A smaller FID value indicates better model performance. When a system bandwidth used by a terminal and a server is 1 GHz, a synchronous update mechanism has a faster convergence speed than an alternating update mechanism. When the system bandwidth used by the terminal and the server is 10 MHz, because the alternating update mechanism requires fewer training periods, the alternating update mechanism has a faster convergence speed than the synchronous update mechanism.

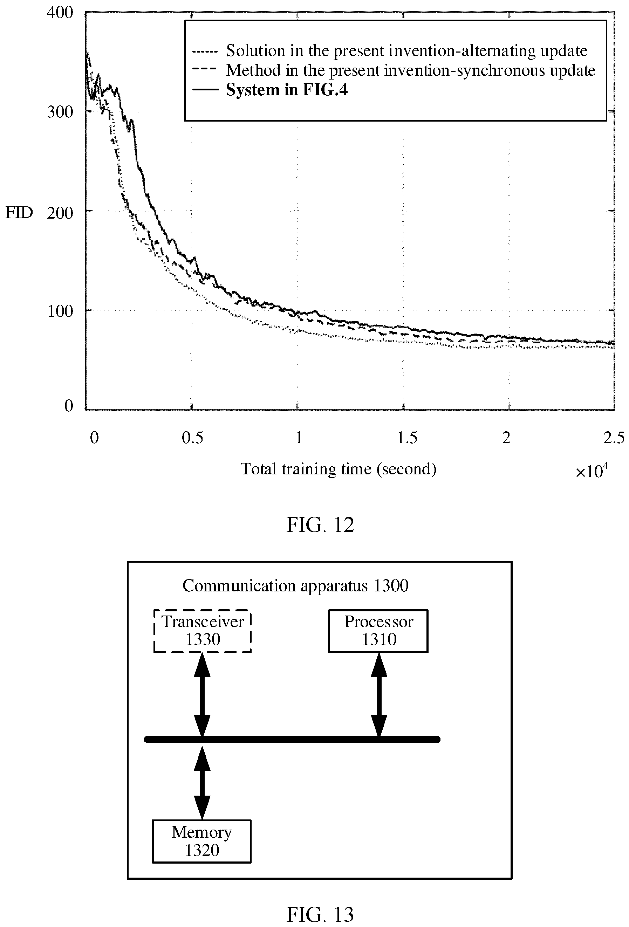

Compared with the federated learning system provided in FIG. 4B, system performance of the alternating update and the synchronous update in this application is shown in FIG. 12. It can be learned from FIG. 12 that, in the alternating update training mechanism provided in this application, a total training time of the alternating update training mechanism is shorter than that of the federated learning architecture. In this application, on one hand, computing power of a server is used, and a computing delay is reduced. On the other hand, only a discriminator parameter needs to be uploaded in an uplink, and a generator parameter does not need to be uploaded, thereby reducing communication overheads of a system. When training mechanisms are simultaneously updated, a model convergence speed similar to that of the federated training architecture can be achieved. However, in this application, only a first discriminator needs to be trained on a terminal side, and a first generator does not need to be trained. Computing energy consumption of the terminal is far less than computing energy consumption of a terminal in the federated training architecture.

In this application, GAN training is implemented through interaction between the first device and the second device. The first device transmits the parameter of the first discriminator to the second device, so that the second device performs parameter aggregation to determine the parameter of the second discriminator, instead of transmitting local original data to the second device. This manner ensures privacy of user data of the first device, and a data amount of the parameter of the first discriminator is significantly reduced compared with transmitting the local original data. In addition, during the GAN training, an update of the parameter of the first discriminator and the parameter of the first generator is determined by using the parameter of the second discriminator and the parameter of the second generator of the second device. In this manner, data processing pressure of the first device can be reduced, and training efficiency of the GAN can be improved.

In addition, FIG. 13 shows a communication apparatus 1300 further provided in this application. For example, the communication apparatus 1300 may be a chip or a chip system. Optionally, in this embodiment of this application, the chip system may include a chip, or may include a chip and another discrete device.

The communication apparatus 1300 may include at least one processor 1310, and the communication apparatus 1300 may further include at least one memory 1320, configured to store a computer program, a program instruction, and/or data. The memory 1320 is coupled to the processor 1310. The coupling in this embodiment of this application may be an indirect coupling or a communication connection between apparatuses, units, or modules in an electrical form, a mechanical form, or another form, and is used for information exchange between the apparatuses, the units, or the modules. The processor 1310 may cooperate with the memory 1320. The processor 1310 may execute the computer program stored in the memory 1320. Optionally, the at least one memory 1320 may also be integrated with the processor 1310.

Optionally, in actual application, the communication apparatus 1300 may include a transceiver 1330 or may not include a transceiver 1330. A dashed box is used as an example in the figure. The communication apparatus 1300 may exchange information with another device by using the transceiver 1330. The transceiver 1330 may be a circuit, a bus, a transceiver, or any other apparatus that may be configured to exchange information.

In a possible implementation, the communication apparatus 1300 may be applied to the foregoing first device, or may be the foregoing second device. The memory 1320 stores a computer program, a program instruction, and/or data necessary for implementing a function of the relay device in any one of the foregoing embodiments. The processor 1310 may execute the computer program stored in the memory 1320, to perform the method in any one of the foregoing embodiments.

A specific connection medium between the transceiver 1330, the processor 1310, and the memory 1320 is not limited in this embodiment of this application. In this embodiment of this application, the memory 1320, the processor 1310, and the transceiver 1330 are connected by using a bus in FIG. 13. The bus is represented by a bold line in FIG. 13. A manner of connection between other components is merely an example for description, and is not limited thereto. The bus may be classified into an address bus, a data bus, a control bus, and the like. For ease of indication, the bus is indicated by using only one thick line in FIG. 13. However, this does not indicate that there is only one bus or only one type of bus. In embodiment of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a nonvolatile memory, a hard disk drive (hard disk drive, HDD) or a solid-state drive (solid-state drive, SSD), or may be a volatile memory (volatile memory), for example, a random access memory (random access memory, RAM). The memory may alternatively be any other medium that can be configured to carry or store expected program code in a form of an instruction or a data structure and that can be accessed by a computer. This is not limited thereto. The memory in embodiment of this application may alternatively be a circuit or any other apparatus that can implement a storage function, and is configured to store the computer program, the program instruction, and/or the data.

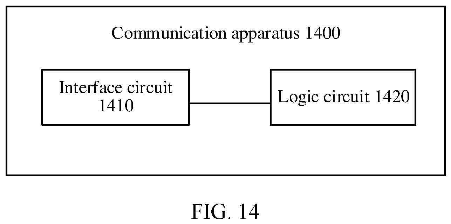

Based on the foregoing embodiments, refer to FIG. 14. An embodiment of this application further provides another communication apparatus 1400, including an interface circuit 1410 and a logic circuit 1420. The interface circuit 1410 may be understood as operation steps the same as those of the transceiver shown in FIG. 13. Details are not described herein again in this application. The logic circuit 1420 may be configured to run the code instruction to perform the method in any one of the foregoing embodiments, and may be understood as the processor in FIG. 13, and may implement a same function as that of the processing unit or the processor. Details are not described herein again in this application.

Based on the foregoing embodiments, an embodiment of this application further provides a readable storage medium. The readable storage medium stores instructions. When the instructions are executed, the training method for generating a GAN in any one of the foregoing embodiments is implemented. The readable storage medium may include any medium that can store program code, such as a USB flash drive, a removable hard disk, a read-only memory, a random access memory, a magnetic disk, or a compact disc.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the apparatus (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided to a general-purpose computer, a dedicated computer, an embedded processor, or a processor of another programmable data processing apparatus to generate a machine, so that the instructions executed by the computer or the processor of the another programmable data processing apparatus generate an apparatus for implementing a function specified in one or more processes in the flowcharts and/or in one or more blocks in the block diagrams.

These computer program instructions may be alternatively stored in a computer-readable memory that can instruct a computer or another programmable data processing apparatus to work in a specific manner, so that the instructions stored in the computer-readable memory generate an artifact that includes an instruction apparatus. The instruction apparatus implements a function specified in one or more processes in the flowcharts and/or in one or more blocks in the block diagrams.

These computer program instructions may be alternatively loaded onto a computer or another programmable data processing apparatus, so that a series of operations and steps are performed on the computer or the another programmable apparatus, to generate computer-implemented processing. Therefore, the instructions executed on the computer or the another programmable apparatus provide steps for implementing a function specified in one or more processes in the flowcharts and/or in one or more blocks in the block diagrams.

**Claims**

1. A generative adversarial network GAN training method, applied to a machine learning system, wherein the machine learning system comprises a first device and a second device, a first GAN runs on the first device, a second GAN runs on the second device, the first GAN comprises a first generator and a first discriminator, and the second GAN comprises a second generator and a second discriminator, wherein the method comprises:

transmitting, by the first device, a parameter of the first discriminator of the first device to the second device, wherein the parameter of the first discriminator is determined by the first device based on local data and a parameter of the first generator of the first device;

receiving a parameter of the second discriminator and a parameter of the second generator from the second device, wherein the parameter of the second discriminator is determined by the second device by performing parameter aggregation on parameters of first discriminators from at least one first device, and the parameter of the second generator is determined by the second device based on the parameter of the second discriminator; and

updating the parameter of the first discriminator and the parameter of the first generator based on the parameter of the second discriminator and the parameter of the second generator.

2. The method according to claim 1, wherein the parameter of the first discriminator is determined by the first device based on the local data, the parameter of the first generator, and a first random number sample set;

the parameter of the second generator is determined by the second device based on the parameter of the second discriminator and a second random number sample set; and

the second random number sample set is the same as a union set of first random number sample sets of X first devices, the X first devices each transmit the parameter of the first discriminator to the second device, and X is a positive integer greater than or equal to 1.

3. The method according to claim 2, further comprising:
updating the parameter of the first discriminator for M times, wherein M is a positive integer greater than or equal to 1, an (i+1)th update of the parameter of the first discriminator is determined by the first device based on the local data, an ith updated parameter of the first generator, and the first random number sample set, and i is any integer from 1 to (M-1).

4. The method according to claim 2, further comprising:
updating the parameter of the first discriminator for M times, wherein M is a positive integer greater than or equal to 1, an ith update of the parameter of the first discriminator is determined by the first device based on the local data, an ith updated parameter of the first generator, and the first random number sample set, and i is any integer from 1 to M.

5. The method according to claim 2, wherein the first random number sample set and the second random number sample set are determined according to a same pseudo-random number algorithm.

6. The method according to claim 5, further comprising:

selecting a random number seed;
determining a quantity of elements in a first preset random number sample set; and
inputting the random number seed and the quantity of elements in the first preset random number sample set into a pseudo random number generator, to determine the first random number sample set.

7. The method according to claim 2, wherein the first random number sample set and the second random number sample set are determined based on a same random number codebook.

8. The method according to claim 7, further comprising:

selecting an initial codebook location;
determining a quantity of elements in a second preset random number sample set; and
querying the random number codebook based on the initial codebook location and the quantity of elements in the second preset random number sample set, to determine the first random number sample set.

9. The method according to any one of claims 2 to 8, wherein before the transmitting a parameter of the first discriminator to the second device, the method further comprises:
receiving random number sample set synchronization information from the second device.

10. The method according to any one of claims 2 to 8, wherein before the transmitting a parameter of the first discriminator of the first device to the second device, the method further comprises:

transmitting random number sample set synchronization information to the second device.

11. A generative adversarial network GAN training method, applied to a machine learning system, wherein the machine learning system comprises a first device and a second device, a first GAN runs on the first device, a second GAN runs on the second device, the first GAN comprises a first generator and a first discriminator, and the second GAN comprises a second generator and a second discriminator, wherein the method comprises:

receiving, by the second device, parameters of first discriminators from N first devices, wherein the parameter of the first discriminator is determined by the first device based on local data and a parameter of the first generator of the first device, and N is an integer greater than or equal to 1;

performing parameter aggregation on the parameters of the first discriminators of the N first devices to determine a parameter of the second discriminator, and determining a parameter of the second generator based on the parameter of the second discriminator; and

transmitting the parameter of the second discriminator and the parameter of the second generator to L first devices, wherein L is a positive integer.

12. The method according to claim 11, wherein the parameter of the second generator is further determined based on the parameters of the first discriminators of the N first devices.

13. The method according to claim 11 or 12, wherein the parameter of the first discriminator is determined by the first device based on the local data, the parameter of the first generator, and a first random number sample set; and the parameter of the second generator is determined by the second device based on the parameter of the second discriminator and a second random number sample set, wherein the second random number sample set is the same as a union set of first random number sample sets of X first devices, and the X first devices each transmit the parameter of the first discriminator to the second device, wherein X is a positive integer greater than or equal to 1.

14. The method according to claim 13, wherein the first random number sample set and the second random number sample set are determined according to a same pseudo-random number algorithm.

15. The method according to claim 14, further comprising:

selecting a random number seed;
determining a quantity of elements in a first preset random number sample set; and
inputting the random number seed and the quantity of elements in the first preset random number sample set into a pseudo random number generator to determine the second random number sample set.

16. The method according to claim 13, wherein the first random number sample set and the second random number sample set are determined based on a same random number codebook.

17. The method according to claim 16, further comprising:

selecting a random number seed;
selecting, by the second device, an initial codebook location;
determining a quantity of elements in a second preset random number sample set; and
querying the random number codebook based on the initial codebook location and the quantity of elements in the second preset random number sample set, to determine the second random number sample set.

18. The method according to any one of claims 13 to 17, wherein before the receiving, by the second device, parameters of first discriminators from N first devices, the method further comprises:
receiving random number sample set synchronization information from the first device.

19. The method according to any one of claims 13 to 17, wherein before the receiving, by the second device, parameters of first discriminators from N first devices, the method further comprises:
transmitting random number sample set synchronization information to the first device.

20. A machine learning system, comprising a first device and a second device, wherein a first GAN runs on the first device, a second GAN runs on the second device, the first GAN comprises a first generator and a first discriminator, and the second GAN comprises a second generator and a second discriminator;

the first device is configured to: transmit a parameter of the first discriminator of the first device to the second device, wherein the parameter of the first discriminator is determined by the first device based on local data and a parameter of the first generator of the first device; receive a parameter of the second discriminator and a parameter of the second generator from the second device, wherein the parameter of the second discriminator is determined by the second device by performing parameter aggregation on parameters of first discriminators from at least one first device, and the parameter of the second generator is determined by the second device based on the parameter of the second discriminator; and update the parameter of the first discriminator and the parameter of the first generator based on the parameter of the second discriminator and the parameter of the second generator; and

the second device is configured to: receive parameters of first discriminators from N first devices, wherein the parameter of the first discriminator is determined by the first device based on local data and a parameter of the first generator of the first device, and N is an integer greater than or equal to 1; perform parameter aggregation on the parameters of the first discriminators of the N first devices to determine the parameter of the second discriminator, and determine the parameter of the second generator based on the parameter of the second discriminator; and transmit the parameter of the second discriminator and the parameter of the second generator to L first devices, wherein L is a positive integer.

21. The system according to claim 20, wherein the parameter of the first discriminator is determined by the first device based on the local data, the parameter of the first generator, and a first random number sample set;

the parameter of the second generator is determined by the second device based on the parameter of the second discriminator and a second random number sample set; and
the second random number sample set is the same as a union set of first random number sample sets of X first devices, the X first devices each transmit the parameter of the first discriminator to the second device, and X is a positive integer greater than or equal to 1.

22. The system according to claim 21, wherein the first device is further configured to: update the parameter of the first discriminator for M times, wherein M is a positive integer greater than or equal to 1, an (i+1)th update of the parameter of the first discriminator is determined by the first device based on the local data, an ith updated parameter of the first generator, and the first random number sample set, and i is any integer from 1 to (M-1).

23. The system according to claim 21, wherein the first device is further configured to: update the parameter of the first discriminator for M times, wherein M is a positive integer greater than or equal to 1, an ith update of the parameter of the first discriminator is determined by the first device based on the local data, an ith updated parameter of the first generator, and the first random number sample set, and i is any integer from 1 to M.

24. The system according to claim 21, wherein the first random number sample set and the second random number sample set are determined according to a same pseudo-random number algorithm.

25. The system according to claim 24, wherein the first device is further configured to:

select a random number seed;
determine a quantity of elements in a first preset random number sample set; and
input the random number seed and the quantity of elements in the first preset random number sample set into a pseudo random number generator to determine the first random number sample set.

26. The system according to claim 24, wherein the second device is further configured to:

select a random number seed;
determine a quantity of elements in a first preset random number sample set; and
input the random number seed and the quantity of elements in the first preset random number sample set into a pseudo random number generator to determine the second random number sample set.

27. The system according to claim 21, wherein the first random number sample set and the second random number sample set are determined based on a same random number codebook.

28. The system according to claim 27, wherein the first device is further configured to:

select an initial codebook location;

determine a quantity of elements in a second preset random number sample set; and

query the random number codebook based on the initial codebook location and the quantity of elements in the second preset random number sample set, to determine the first random number sample set.

29. The system according to claim 27, wherein the second device is further configured to:

select an initial codebook location;

determine a quantity of elements in a second preset random number sample set; and

query the random number codebook based on the initial codebook location and the quantity of elements in the second preset random number sample set, to determine the second random number sample set.

30. The system according to any one of claims 21 to 29, wherein the first device is further configured to: before the transmitting the parameter of the first discriminator of the first device to the second device, receive random number sample set synchronization information from the second device.

31. The system according to any one of claims 21 to 29, wherein the first device is further configured to: before the transmitting the parameter of the first discriminator of the first device to the second device, transmit random number sample set synchronization information to the second device.

32. A communication apparatus, comprising at least one processor and a memory, wherein

the memory stores a computer program or instructions; and

the at least one processor is configured to execute the computer program or the instructions, so that the method according to any one of claims 1 to 10 or any one of claims 11 to 19 is performed.

33. A communication apparatus, comprising a logic circuit and an interface circuit, wherein

the interface circuit is configured to send a parameter of a first discriminator or receive a parameter of a second discriminator and a parameter of a second generator; and

the logic circuit is configured to perform the method according to any one of claims 1 to 10 or any one of claims 11 to 19.

34. A computer-readable storage medium, wherein the computer-readable storage medium stores instructions; and when the instructions are executed by a computer, the method according to any one of claims 1 to 10 or any one of claims 11 to 19 is performed.

35. A computer program product comprising a computer program or instructions, wherein when the computer program product runs on a computer, the method according to any one of claims 1 to 10 or any one of claims 11 to 19 is performed.

**100**

FIG. 1

FIG. 2

FIG. 3

FIG. 4A

FIG. 4B

EP 4 345 699 A1

FIG. 5

| Terminal 1 | ··· | Terminal $k$ | | Central server |
|---|---|---|---|---|

Step 601A. Transmit a parameter of a first discriminator of the terminal 1

Step 601B. Transmit a parameter of a first discriminator of the terminal $k$

Step 602. Perform parameter aggregation on the parameter of the first discriminator of the terminal 1 and the parameter of the first discriminator of the terminal k to determine a parameter of a second discriminator, and determine a parameter of a second generator based on the parameter of the second discriminator

Step 603A. Transmit the parameter of the second discriminator and the parameter of the second generator

Step 603B. Transmit the parameter of the second discriminator and the parameter of the second generator

Step 604A. Update the parameter of the first discriminator of the terminal 1 and the parameter of the first generator of the terminal 1 based on the parameter of the second discriminator and the parameter of the second generator

Step 604B. Update the parameter of the first discriminator of the terminal k and the parameter of the first generator of the terminal k based on the parameter of the second discriminator and the parameter of the second generator

FIG. 6

Random
number seed

Quantity of
elements in a
first preset
random number
sample set

**Pseudo random number
generator**

Random number
sample set

FIG. 7

Initial random number
codebook location

Quantity of elements in
a second preset random
number sample set

**Random number
codebook**

Random number
sample set

FIG. 8

EP 4 345 699 A1

| Terminal 1 | Terminal 2 | ••• | Terminal *K* | Server |
|---|---|---|---|---|

Model initialization

Terminal scheduling, and random number sample synchronization information determination

Scheduling signaling and random number sample synchronization information delivery

•••

×← Unscheduled

| First discriminator training | ••• | First discriminator training | Second generator training |
|---|---|---|---|

First discriminator parameter uploading

•••

One training period

TO FIG. 9A(2)                          TO FIG. 9A(2)

FIG. 9A(1)

First discriminator
parameter aggregation

Second generator parameter and second
discriminator parameter delivery

• • •

First
generator
parameter
and first
discriminator
parameter
update

First
generator
parameter
and first
discriminator
parameter
update

• • •

First
generator
parameter
and first
discriminator
parameter
update

FIG. 9A(2)

EP 4 345 699 A1

| Terminal 1 | Terminal 2 | ... | Terminal K | Server |

**Model initialization**

Terminal scheduling

Scheduling signaling delivery
•••

✕◄ Unscheduled

| Random number sample synchronization information determination | Random number sample synchronization information determination |

Random number sample synchronization information uploading
•••

| First discriminator training | ••• | First discriminator training | Second generator training |

First discriminator parameter uploading
•••

One training period

TO FIG. 9B(2)                    TO FIG. 9B(2)

FIG. 9B(1)

First discriminator
parameter aggregation

Second generator parameter and second
discriminator parameter delivery

• • •

First generator
parameter and
first
discriminator
parameter
update

First generator
parameter and
first
discriminator
parameter
update

• • •

First generator
parameter and
first
discriminator
parameter
update

FIG. 9B(2)

EP 4 345 699 A1

EP 4 345 699 A1

| Terminal 1 | Terminal 2 | ••• | Terminal $K$ | Server |
|---|---|---|---|---|

| Model initialization |
|---|

Terminal scheduling, and random number sample synchronization information determination

Scheduling signaling and random number sample synchronization information delivery

•••

Unscheduled

| First discriminator training | ••• | First discriminator training |
|---|---|---|

First discriminator parameter uploading

•••

One training period

TO FIG. 10A(2)                    TO FIG. 10A(2)

FIG. 10A(1)

First discriminator
parameter aggregation

Second generator
training

Second generator parameter and second
discriminator parameter delivery

• • •

First
generator
parameter
and first
discriminator
parameter
update

First
generator
parameter
and first
discriminator
parameter
update

• • •

First
generator
parameter
and first
discriminator
parameter
update

FIG. 10A(2)

EP 4 345 699 A1

EP 4 345 699 A1

| Terminal 1 | Terminal 2 | ••• | Terminal $K$ | | Server |

Model initialization

Terminal scheduling

Scheduling signaling delivery

•••

Unscheduled

| Random number sample synchronization information determination | Random number sample synchronization information determination |

Random number sample synchronization information uploading

•••

| First discriminator training | ••• | First discriminator training |

First discriminator parameter uploading

•••

One training period

TO FIG. 10B(2)      TO FIG. 10B(2)

FIG. 10B(1)

First discriminator
parameter
aggregation

Second generator
training

Second generator parameter and second
discriminator parameter delivery

• • •

First generator
parameter and
first
discriminator
parameter
update

First generator
parameter and
first
discriminator
parameter
update

• • •

First generator
parameter and
first
discriminator
parameter
update

FIG. 10B(2)

EP 4 345 699 A1

**Bandwidth 1 GHz**

**Bandwidth 10 MHz**

FIG. 11

Legend:
- Solution in the present invention-alternating update
- Method in the present invention-synchronous update
- **System in FIG.4**

Y-axis: FID (0, 100, 200, 300, 400)

X-axis: Total training time (second) (0, 0.5, 1, 1.5, 2, 2.5) $\times 10^4$

FIG. 12

Communication apparatus 1300

Transceiver 1330

Processor 1310

Memory 1320

FIG. 13

Communication apparatus 1400

Interface circuit
1410

Logic circuit 1420

FIG. 14

| INTERNATIONAL SEARCH REPORT | International application No. |
| --- | --- |
| | **PCT/CN2022/099839** |

**A. CLASSIFICATION OF SUBJECT MATTER**

G06N 20/00(2019.01)i

According to International Patent Classification (IPC) or to both national classification and IPC

**B. FIELDS SEARCHED**

Minimum documentation searched (classification system followed by classification symbols)

G06N; G06K; G06F

Documentation searched other than minimum documentation to the extent that such documents are included in the fields searched

Electronic data base consulted during the international search (name of data base and, where practicable, search terms used)

WPI; EPODOC; CNPAT; CNKI; IEEE: 协同训练, 联邦学习, 生成对抗网络, 生成器, 判别器, 终端, 服务器, 上报, 上传, 参数, 梯度, 聚合, 更新, federation learning, GAN, terminal, server, upload, parameter, gradient, aggregate, update

**C. DOCUMENTS CONSIDERED TO BE RELEVANT**

| Category* | Citation of document, with indication, where appropriate, of the relevant passages | Relevant to claim No. |
| --- | --- | --- |
| PX | REN, Jinke et al. "A New Distributed Method for Training Generative Adversarial Networks" *https://arxiv.org/abs/2107.08681*, 19 July 2021 (2021-07-19), pp. 1-3 | 1-35 |
| A | CN 110874648 A (ALIPAY (HANGZHOU) INFORMATION TECHNOLOGY CO., LTD.) 10 March 2020 (2020-03-10) description, paragraphs [0023]-[0058] | 1-35 |
| A | CN 112686205 A (UNIVERSITY OF ELECTRONIC SCIENCE AND TECHNOLOGY OF CHINA, ZHONGSHAN INSTITUTE et al.) 20 April 2021 (2021-04-20) entire document | 1-35 |
| A | US 2020134446 A1 (GENERAL ELECTRIC COMPANY) 30 April 2020 (2020-04-30) entire document | 1-35 |

☐ Further documents are listed in the continuation of Box C.  ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **02 September 2022** | **14 September 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/099839**

| Patent document cited in search report | | | Publication date (day/month/year) | Patent family member(s) | | | Publication date (day/month/year) |
|---|---|---|---|---|---|---|---|
| CN | 110874648 | A | 10 March 2020 | None | | | |
| CN | 112686205 | A | 20 April 2021 | None | | | |
| US | 2020134446 | A1 | 30 April 2020 | EP | 3648016 | A1 | 06 May 2020 |
| | | | | CN | 111127389 | A | 08 May 2020 |

Form PCT/ISA/210 (patent family annex) (January 2015)

**REFERENCES CITED IN THE DESCRIPTION**

**Patent documents cited in the description**

- CN 202110688066

- CN 202110831248